# EUROPEAN PATENT APPLICATION

(11) **EP 3 869 907 A1**
(43) Date of publication of application: **25.08.2021**
(21) Application number: 20158853.0
(22) Date of filing: 21.02.2020
(51) Int. Cl.: H04W 76/27, H04W 72/12

(54) **USER EQUIPMENT (UE) AND BASE STATION (BS) INVOLVED IN TRANSMISSION OF SMALL DATA IN INACTIVE STATE FROM USER EQUIPMENT (UE) TO BASE STATION (BS)**

(71) Applicant: Panasonic Intellectual Property Corporation of America, Torrance, CA 90503 (US)
(72) Inventor: TAO, Ming-Hung, 63225 Langen (DE); SUZUKI, Hidetoshi, Osaka-shi,, Osaka (JP); SHAH, Rikin, 63225 Langen (DE)
(74) Representative: Grünecker Patent- und Rechtsanwälte PartG mbB

(57) **Abstract**

The present disclosure relates to a user equipment (UE), comprising a processor, which determines that a transmission of small data is to be performed. The UE is in an inactive state with at least one data connection to a radio base station. The UE is assigned at least with a cell-specific UE identification and a non-cell-specific UE identification. The processor determines which UE identification to use for the small data transmission, based on whether the UE, after having transitioned to the inactive state, has moved to the current radio cell from another radio cell. In case the UE has moved to the current radio cell from another radio cell, the non-cell-specific UE identification is used. In the other case, the cell-specific UE identification is used. A transmitter transmits a control message including the determined UE identification and transmits the small data using one of the at least one data connection.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for facilitating a UE to transmit small data, for example when the UE is in an inactive state.

In an embodiment, the techniques disclosed here feature a user equipment comprising the following. A processor of the UE determines that a transmission of small data is to be performed. The UE is in an inactive state with at least one data connection to a radio base station that controls a radio cell in which the UE is located. The UE is assigned at least with a cell-specific UE identification and a non-cell-specific UE identification. The processor determines which UE identification to use for the small data transmission, based on whether the UE, after having transitioned to the inactive state, has moved to the current radio cell from another radio cell. In case the UE has moved to the current radio cell from another radio cell, the processor determines to use the non-cell-specific UE identification for the small data transmission. In case the UE has not moved to the current radio cell from another radio cell, the processor determines to use the cell-specific UE identification for the small data transmission. A transmitter of the UE transmits a control message including the determined UE identification and transmits the small data using one of the at least one data connection.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6 and 7**: illustrate the contention-based and contention-free RACH procedure;
- **Fig. 8**: illustrates the possible RRC state changes,
- **Fig. 9**: illustrates a message exchange for the RRC Resume procedure,
- **Fig. 10**: illustrates a message exchange for the RRC Release procedure,
- **Fig. 11 and**: **12** illustrate the user plane protocol structure respectively for downlink and uplink,
- **Fig. 13**: illustrates a message exchange of the prior art for uplink data transmission, including a state change of the UE from Inactive to Connected state;
- **Fig. 14**: illustrates an exemplary and simplified structure of a UE and gNB,
- **Fig. 15**: illustrates a structure of the UE according to an exemplary implementation of an improved data transmission procedure,
- **Fig. 16**: is a flow diagram for the UE behavior, according to an exemplary implementation of the improved data transmission procedure,
- **Fig. 17**: illustrates a structure of the base station according to an exemplary implementation of the improved data transmission procedure,
- **Fig. 18**: is a flow diagram for the base station behavior, according to an exemplary implementation of the improved data transmission procedure,
- **Fig. 19**: illustrates a message exchange between the UE and the base station for an exemplary implementation of the improved data transmission procedure, in case no cell change occurred during the inactive state,
- **Fig. 20**: illustrates a message exchange between the UE, the old and new base stations for an exemplary implementation of the improved data transmission procedure, in case a cell change occurred during the inactive state,
- **Fig. 21**: is a flow diagram for the UE behavior, according to another exemplary implementation of the improved data transmission procedure,
- **Fig. 22**: illustrates a message exchange between the UE and the base station for an exemplary implementation of the improved data transmission procedure, based on a 4-step RACH procedure,
- **Fig. 23**: illustrates the structure of a msg3/msgA of the RACH procedure, according to an exemplary implementation of the improved data transmission procedure,
- **Fig. 24**: illustrates a message exchange between the UE and the base station for an exemplary implementation of the improved data transmission procedure, based on a 2-step RACH procedure, and
- **Fig. 25**: illustrates a message exchange between the UE, the old and new base stations for an exemplary implementation of the improved data transmission procedure, based on a 4-step RACH procedure.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

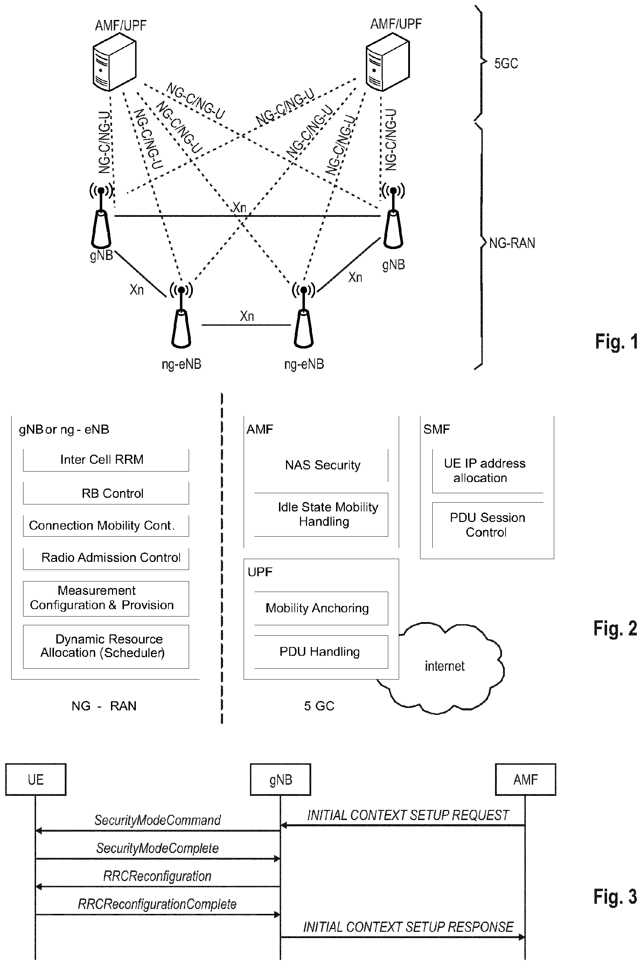

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.0.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.0.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

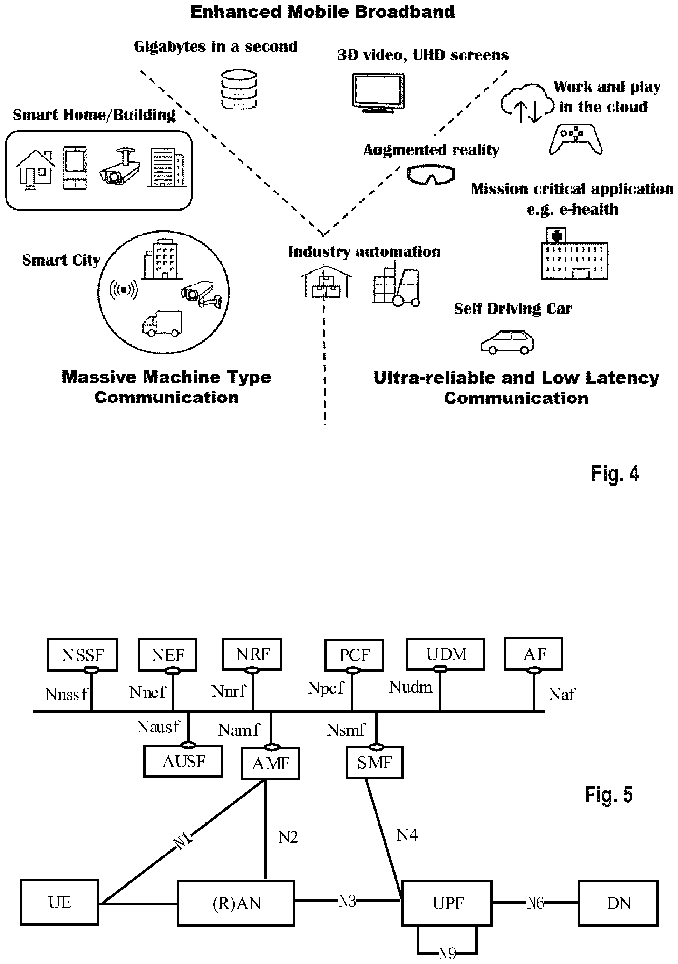

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 15.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.3.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell if synchronization has been lost due to a too long period without any uplink transmission from the device;
- To request uplink scheduling if no dedicated scheduling request resource has been configured for the device.

There are numerous events that may trigger the UE to perform a random access procedure (see 3GPP TS 38.300, v16.0.0 section 9.2.6).

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

There can be two types of random access procedures allowing access to be either contention based, i.e. implying an inherent risk of collision, or contention free (non-contention based). An exemplary definition of a random access procedure can be found in 3GPP TS 38.321, v15.8.0 section 5.1.

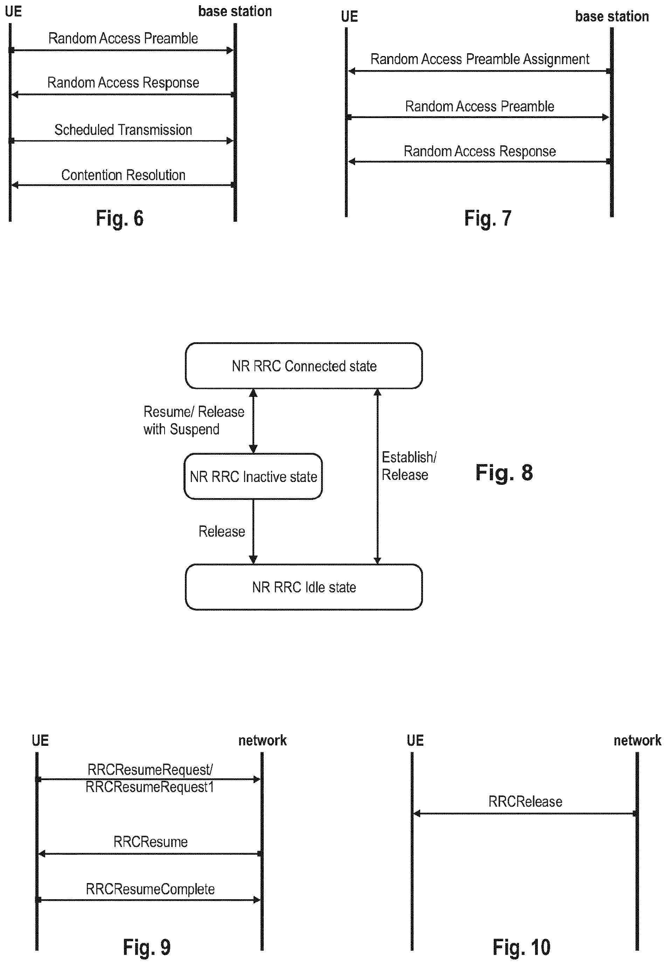

The RACH procedure will be described in the following in more detail, with reference to **Fig. 6 and 7**. In the following, the contention-based random access procedure is being described in more detail with respect to **Fig. 6**. This procedure consists of four "steps", and thus can be termed for example as a 4-step RACH procedure. First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipment transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, since the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual message with certain functionality such as the RRC Connection Request, a RRC Resume Request or the buffer status report.

In case of a preamble collision having occurred in the first message of the RACH procedure, i.e. multiple user equipment have sent the same preamble on the same PRACH resource, the colliding user equipments will receive the same T-CRNTI within the random access response and will also collide in the same uplink resources when transmitting their scheduled transmission in the third step of the RACH procedure. In case the scheduled transmission from one user equipment is successfully decoded by base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 7** is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment is subsequently sending the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

3GPP is also studying a 2-step (contention-based) RACH procedure for 5G NR, where a message 1 (termed as MSGA), that corresponds to messages 1 and 3 in the four-step LTE/NR RACH procedure, is transmitted at first. The MSGA of the 2-step RACH type includes a preamble on the Physical Random Access Channel (PRACH) and a payload on the Physical Uplink Shared Channel (PUSCH). After MSGA transmission, the UE monitors for a response from the gNB within a configured time window. Then, the gNB will respond with a message 2 (termed as MSGB), corresponding to messages 2 and 4 of the 4-step LTE/NR RACH procedure. This msgB can include e.g. a Success random access response (RAR), a Fallback RAR, and optionally a backoff indication. If contention resolution is successful upon receiving the Success RAR, the UE ends the random access procedure; while if Fallback RAR is received in MSGB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MSGA.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message msgA uses not only the PRACH resource (e.g. the RACH occasion and preamble) but also the associated PUSCH resources.

### UE identifications

RNTI stands for Radio Network Temporary Identifier. For instance, an RNTI can used to differentiate and identify a UE in the radio cell. Further, an RNTI can also identify a specific radio channel, a group of UEs in case of paging, a group of UEs for which power control is issued by the eNB, system information transmitted for all the UEs by 5G gNB. 5G NR defines numerous different identifications for the UE, some of which are presented in the following table (see 3GPP TS 38.321 v15.8.0, section 7.1).

| **RNTI** | **Usage** | **Transport Channel** | **Logical Channel** |
|---|---|---|---|
| P-RNTI | Paging and System Information change notification | PCH | PCCH |
| SI-RNTI | Broadcast of System Information | DL-SCH | BCCH |
| RA-RNTI | Random Access Response | DL-SCH | N/A |
| Temporary C-RNTI | Contention Resolution (when no valid C-RNTI is available) | DL-SCH | CCCH, DCCH |
| Temporary C-RNTI | Msg3 transmission | UL-SCH | CCCH, DCCH, DTCH |
| C-RNTI, MCS-C-RNTI | Dynamically scheduled unicast transmission | UL-SCH | DCCH, DTCH |
| C-RNTI | Dynamically scheduled unicast transmission | DL-SCH | CCCH, DCCH, DTCH |
| MCS-C-RNTI | Dynamically scheduled unicast transmission | DL-SCH | DCCH, DTCH |
| C-RNTI | Triggering of PDCCH ordered random access | N/A | N/A |
| CS-RNTI | Configured scheduled unicast transmission (activation, reactivation and retransmission) | DL-SCH, UL-SCH | DCCH, DTCH |
| CS-RNTI | Configured scheduled unicast transmission (deactivation) | N/A | N/A |
| TPC-PUCCH-RNTI | PUCCH power control | N/A | N/A |
| TPC-PUSCH-RNTI | PUSCH power control | N/A | N/A |
| TPC-SRS-RNTI | SRS trigger and power control | N/A | N/A |
| INT-RNTI | Indication pre-emption in DL | N/A | N/A |
| SFI-RNTI | Slot Format Indication on the given cell | N/A | N/A |
| SP-CSI-RNTI | Activation of Semi-persistent CSI reporting on PUSCH | N/A | N/A |
| NOTE: The usage of MCS-C-RNTI is equivalent to that of C-RNTI in MAC procedures (except for the C-RNTI MAC CE). | | | |

Apart from the above-identified RNTIs, there can be further IDs, such as the Inactive-RNTI (I-RNTI) (see TS 38.331 v15.8.0 e.g. section 6.3.2). The Inactive-RNTI is used for a UE in the RRC_INACTIVE state and for example in the process of identifying and locating the suspended UE context of that UE. According to one implementation, the network assigns the I-RNTI when the UE moves (e.g. from RRC_CONNECTED) to the RRC_INACTIVE state (e.g. as part of the RRCRelease message within SuspendConfig). There are two types of I-RNTIs, namely the full I-RNTI and the short I-RNTI. The network can inform the UE (e.g. as part of SIB1, System Information Block 1), which I-RNTI to use when resuming the connection. The full I-RNTI is a bit string of length 40 bits, while the short I-RNTI is a bit string of length 24 bits.

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine may also be extended with an inactive state (see e.g. TS 38.331 v15.8.0, Figure 4.2.1-2), similar to the NR 5G as explained in the following.

The RRC in NR 5G (see TS 38.331 v15.8.0, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in **Fig. 8**:
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

According to an exemplary 5G NR implementation, the different states are characterized as follows (see section 4.2.1 of TS 38.331):
*"**RRC_IDLE**:*
   - *A UE specific DRX may be configured by upper layers;*
   - *UE controlled mobility based on network configuration;*
   - *The UE:*
      - *Monitors Short Messages transmitted with P-RNTI over DCI (see clause 6.5);*
      - *Monitors a Paging channel for CN paging using 5G-S-TMSI;*
      - *Performs neighbouring cell measurements and cell (re-)selection;*
      - *Acquires system information and can send SI request (if configured).*
**-** ***RRC_INACTlVE**:*
   - *A UE specific DRX may be configured by upper layers or by RRC layer;*
   - *UE controlled mobility based on network configuration;*
   - *The UE stores the UE Inactive AS context;*
   - *A RAN-based notification area is configured by RRC layer;*
      *The UE:*
      - *Monitors Short Messages transmitted with P-RNTI over DCI (see clause 6.5);*
      - *Monitors a Paging channel for CN paging using 5G-S-TMSI and RAN paging using fullI-RNTI;*
      - *Performs neighbouring cell measurements and cell (re-)selection;*
      - *Performs RAN-based notification area updates periodically and when moving outside the configured RAN-based notification area;*
      - *Acquires system information and can send SI request (if configured).*
- ***RRC_CONNECTED:***
   - *The UE stores the AS context;*
   - *Transfer of unicast data to*/*from UE;*
   - *At lower layers, the UE may be configured with a UE specific DRX;*
   - *For UEs supporting CA, use of one or more SCells, aggregated with the SpCell, for increased bandwidth;*
   - *For UEs supporting DC, use of one SCG, aggregated with the MCG, for increased bandwidth;*
   - *Network controlled mobility within NR and to*/*from E-UTRA;*
   - *The UE:*
      - *Monitors Short Messages transmitted with P-RNTI over DCI (see clause 6.5), if configured;*
      - *Monitors control channels associated with the shared data channel to determine if data is scheduled for it;*
      - *Provides channel quality and feedback information;*
      - *Performs neighbouring cell measurements and measurement reporting;*
      - *Acquires system information."*

According to the characteristics of the RRC Inactive state, for the Inactive UE the connection (both for user plane and control plane) is maintained with RAN and the core network. More specifically, in RRC Inactive, although the connection still exists, it is suspended, or put differently the connection is not active anymore. On the other hand, in RRC Connected state, the connection exists and is active, e.g. in the sense that it is used for a data transmission. In RRC Idle state, the UE has no RRC connection with the RAN and the core network, which also means that e.g. the radio base station does not have any context of the UE and e.g. does not know the identification of the UE and does not have security parameters relating to the UE to be able to properly decode data transmitted by the UE (security e.g. ensures integrity of the transmitted data). UE context may be available in the core network, but would have to be fetched first by the radio base station.

In addition, the paging mechanism (may also be called e.g. notification mechanism) for user equipments in that radio cell is based on so called radio access network, RAN,-based notification areas (in short RNAs). The radio access network should be aware of the current RNA the user equipment is located in, and the user equipment may assist the gNB to track the UE moving among various RNAs. The RNA can be UE-specific.

One example of an RRC resume procedure to move to the RRC_Connected state (see TS 38.331 v15.8.0 section 5.3.13) is explained in the following with reference to **Fig. 9**. The purpose of this procedure is to resume a suspended RRC connection (may include resuming signaling and data radio bearers) or to perform the RNA update upon the UE moving out of the configured RNA.

The procedure allows to transmit either the RRCResumeRequest message or the RRCResumeRequest1 message. When transmitting the RRCResumeRequest message, the short I-RNTI (e.g. truncated I-RNTI) is used as the UE identity (exemplary termed "*resumeldentity*"). When transmitting the RRCResumeRequest1 message, the full I-RNTI is used as the UE identity (exemplary termed "*resumeldentity*"). UE checks the indication "*useFullResumeID*" in SIB1 and determines to transmit either the RRCResumeRequest or the RRCResumeRequest1 message. If the "*useFullResumeID*" indicates "true", the UE will transmit RRCResumeRequest1 with full I-RNTI; otherwise, the UE will transmit RRCResumeRequest with short I-RNTI. The actions the UE performs for the RRC Resume procedure (see section 5.3.13.4 of TS 38.331) include resuming the SRB2 and all DRBs (which were suspended when entering the RRC Inactive state, see below).

One example of a subsequent RRC connection release procedure to transition to the RRC Inactive state (see TS 38.331 v15.8.0 section 5.3.8) is explained in the following with reference to **Fig. 10**.

The purpose of this procedure is to release the RRC connection or to suspend the RRC connection. For instance, the network initiates the RRC connection release procedure to transit a UE in RRC_CONNECTED to RRC_IDLE or to RRC_INACTIVE. The actions the UE performs for the RRC Connection Release procedure (see section 5.3.8.3 of TS 38.331) include suspending all SRB(s) (Signaling Radio Bearers) and DRB(s) (Data Radio Bearers) except SRB0, in case the release is done with suspend (e.g. "*RRCRelease* includes *suspendConfig"*)*.* Correspondingly, the UE in RRC Inactive state does not have any non-suspended or active DRB (only suspendedDRBs). SRB0, which is kept active, even in RRC Inactive state, can be used by the UE e.g. for performing the RACH procedure, e.g. when carrying RRC messages, such as the RRCResumeRequest, RRCResumeRequest1, RRCSetupRequest.

In an exemplary implementation in 5G NR, signaling radio bearers (see TS 38.331 v15.8.0 section 4.2.2) are defined as radio bearers that are used only for the transmission of RRC and NAS messages, and may include SRB0 (for RRC messages using the CCCH logical channel), SRB1, SRB2, and SRB3. In an exemplary implementation in 5G NR (see TS 38.300 v16.0.0 section 12.1), the NG-RAN establishes at least one DRB together with the PDU Session, and additional DRB(s) for QoS flow(s) of that PDU session can be subsequently configured. The NG-RAN then maps packets belonging to different PDU sessions to different DRBs. NG-RAN and 5GC ensure quality of service (e.g. reliability and target delay) by mapping packets to appropriate QoS Flows and DRBs. Put differently, a DRB is used to carry user data associated with a PDU session.

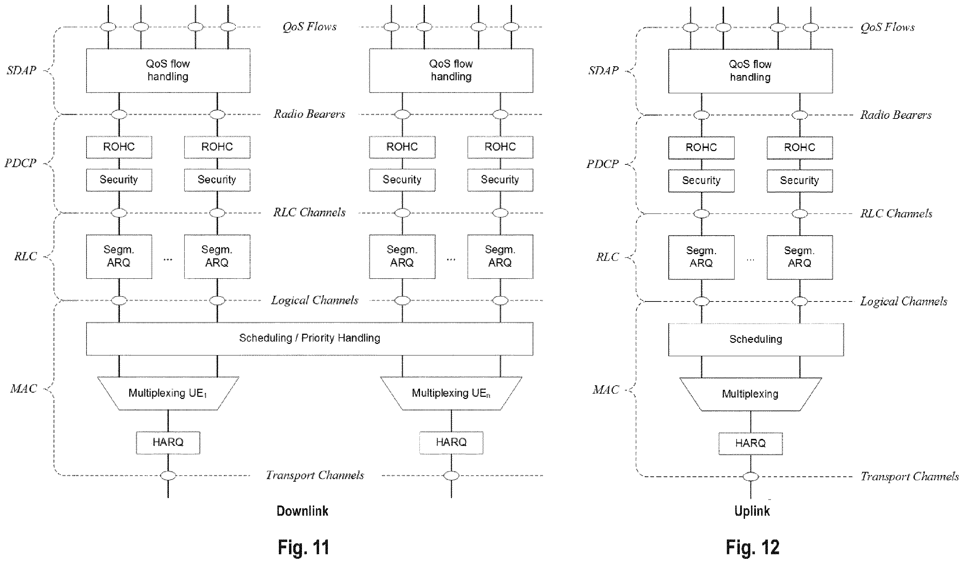

An overview of how radio bearers are defined in relation to logical channel, transport channels and different QoS flows is illustrated in **Fig. 11** and **Fig. 12**, respectively for downlink and uplink (see 3GPP TS 38.300 v16.0.0, section 6.1). The two figures depict the Layer 2 architecture for downlink and uplink, where:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and segm. to segmentation;
- Control channels (BCCH, PCCH are not depicted for clarity).

Radio bearers are categorized into two groups: data radio bearers (DRB) for user plane data and signalling radio bearers (SRB) for control plane data.

### Small-data transmissions

The characteristics of the small-data transmissions that are targeted in this disclosure refer to any service with the characteristics that data bursts in UL/DL are small and optionally rather infrequent with no strict requirements on delay. Typical non-limiting examples of traffic characteristics are captured in the following table (see TR 25.705 v13.0.0 section 5).

| **Characteristics of the small-data transmissions** | |
|---|---|
| **Traffic parameter** | **Value** |
| application packet size | 100 bytes (UL); 100 bytes (DL) |
| latency¹ | 5s to 30min; 1 hour for no mobility (static, pedestrian) |
| frequency | every minute and up to monthly |
| NOTE 1: latency is the duration from when the packet arrives at the buffer until it is completely transmitted (delay tolerance of the application). | |

### Small-data transmission by UE in RRC Inactive state

The present invention provides an improved procedure that allows a UE in the RRC Inactive state to transmit data (e.g. small data), more particularly without the need to change the UE state.

In more detail, 5G NR supports the RRC_INACTIVE state, and UEs with infrequent (periodic and/or non-periodic) data transmission are generally maintained by the network in the RRC_INACTIVE state. Until Rel-16, the RRC_INACTIVE state does not support data transmission. Hence, the UE has to resume the connection (e.g. move to RRC_CONNECTED state) for any DL (MobileTerminated) and UL (MobileOriginated) data. Connection setup (or resume) and subsequently release to INACTIVE state happens for each data transmission, however small and infrequent the data packets are. This results in unnecessary power consumption and signalling overhead.

Specific examples of small and infrequent data traffic include the following use cases:
- Smartphone applications:
   ∘ Traffic from Instant Messaging services (whatsapp, QQ, wechat etc.)
   ∘ Heart-beat/keep-alive traffic from IM/email clients and other apps
   ∘ Push notifications from various applications
- Non-smartphone applications:
   ∘ Traffic from wearables (periodic positioning information etc.)
   ∘ sensors (Industrial Wireless Sensor Networks transmitting temperature, pressure readings periodically or in an event triggered manner etc.)
   ∘ smart meters and smart meter networks sending periodic meter readings

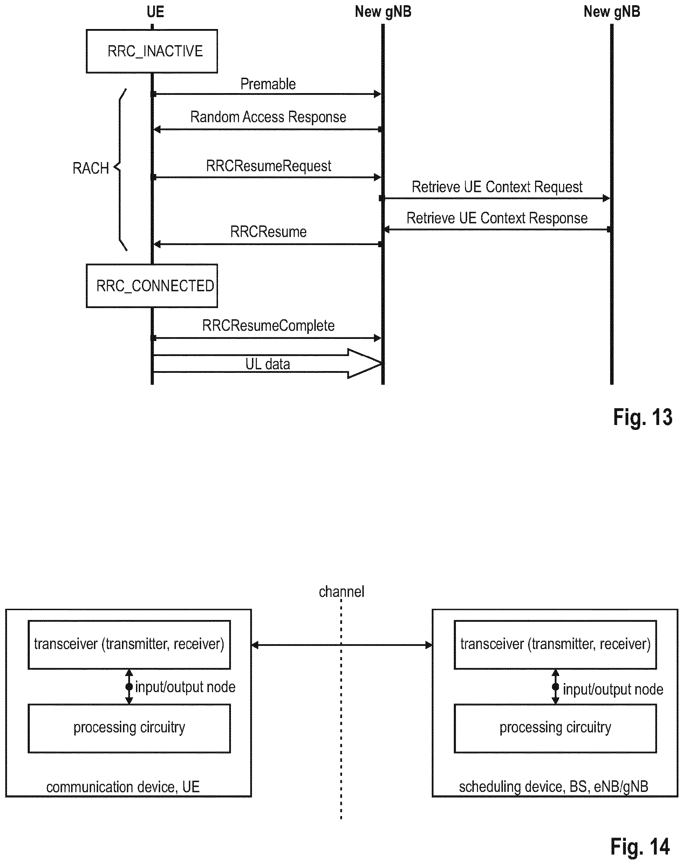

A exemplary procedure of the prior art (in this case a 5G NR compliant prior art solution) to enable a UE in the RRC Inactive state to transmit (small) data will be briefly explained in the following with reference to **Fig. 13**. As apparent from the figure, the UE is assumed to be in RRC_Inactive, which involves that the UE (and gNB) has all data radio bearers suspended, and no data can be transmitted to the gNB. In order to enable the UE to transmit data, the UE has to be first transitioned into the RRC Connected state, which can be done by the UE requesting to resume the RRC connection (here transmitting RRCResumeRequest) as part of the RACH procedure (in Fig. 13, e.g. using the 4-step RACH procedure). In detail, the UE may transmit the preamble to the current gNB, then received a corresponding random access response (with a small UL grant of radio resources), which are used by the UE to transmit the RRCResumeRequest message as msg3 of the RACH procedure.

In the exemplary scenario of Fig. 13, it is assumed that the UE moved to a new gNB from its previous Anchor gNB. Thus, the new gNB does not yet have the suitable contexts for the UE, which have to be retrieved first from the Anchor gNB.

Finally, the new gNB provides the RRCResume message to the UE, which then transitions to the RRC Connected state, including the resumption of all data radio bearers. In RRC_Connected state the UE is then able to transmit the UL data.

As can be appreciated from the description of Fig. 13, transitioning to the connected state before the UE can send any user data introduces latency and consumes significant UE power for each transmission of user data.

Moreover, signalling overhead from INACTIVE state UEs for small data packets is a general problem and will become a critical issue with more UEs in 5G NR not only for network performance and efficiency, but also for the UE battery performance. In general, any device that has intermittent small data packets in INACTIVE state will benefit from enabling small-data transmission in the INACTIVE state.

In 3GPP, no final agreements have been reached as a standardized method on how the transmission of (small) data can be enabled for a UE that stays in the RRC Inactive state.

The inventors have identified the possibility of completing and / or improving the mechanism and procedures involved for enabling a UE to transmit data when in RRC Inactive state.

For the following description of the improved procedures for transmission of data for a UE in the RRC Inactive state, focus is made on transmission of small data (e.g. as defined before in connection with the 5G NR study items and agreements). However, the invention should not be limited thereto, but should also be applicable, following the same principles lined out below for a small-data transmission, when intending to transmit more or other data than typically considered small data.

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term "**data connection**" used herein can be understood as connection over which a transmission of data (e.g. small data) is possible, e.g. between a UE and a radio base station. In more detail, a UE without a data connection, e.g. even if connected with the radio base station based on a signaling connection, cannot immediately transmit data. Data in this context can be understood broadly as user data, e.g. from an application running on the UE, in contrast to e.g. control information which would be rather transmitted using a signaling connection.

In one exemplary implementation, according to the 5G NR standard, the data connection can be understood as a data radio bearer, DRB, and the signaling connection can be understood as a signaling radio bearer, SRB.

In some instances, the present application further distinguishes between different conditions of a data connection, e.g. non-existent, existent but suspended, existent but not used (could also be termed non-suspended or inactive), existent and currently used to transmit data (could also be termed active). Following this categorization of the data connection, a suspended data connection, although it exists, cannot be used immediately to transmit data (e.g. in the uplink), because it is suspended by both endpoints (e.g. the UE and the radio base station) and needs to be resumed first. On the other hand, a non-suspended data connection may allow an immediate data transmission (e.g. without any further procedure such as resuming the data connection). For example when referring to an exemplary 5G NR implementation as currently defined in the 3GPP standards, the UE in the RRC Inactive state will have one or more suspended data connections (DRBs are suspended); the UE in the RRC Connected state may have one or more active data connections and possibly other non-suspended data connections (that are currently not actively used); and the UE in the RRC Idle state will not have a data connection (neither suspended nor active). On the other hand, according to the improved data transmission procedure explained in the following, different from the currently defined 5G NR implementation in the 3GPP standards, the UE in the RRC Inactive state will have one or more non-suspended data connections available (these will be inactive because no data is being exchanged, until the small data transmission).

In this context, the present application explains that a data connection is used e.g. by the UE to transmit the small data. In the present scenarios, the data connection is established between the UE and the base station. In one exemplary implementation, a data connection is to be broadly understood as being associated with certain parameters, relating to coding, security, encryption etc. Thus, from the transmitting side perspective, the UE applies these parameters associated with that data connection to the (small) data to be transmitted using this data connection. This may be done e.g. to ensure a particular Quality of Service. Correspondingly, from the receiving side perspective, the receiver may need to apply the converse processing (e.g. relating to coding, security, encryption, etc.) as in the transmitting side, so as to successfully decode the data transmitted via the data connection.

**Fig. 14** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

An improved data transmission procedure will be described in the following. In said connection, an improved UE is presented which participates in the improved data transmission procedure. Furthermore, an improved radio base station is presented which participates in the improved data transmission procedure. Corresponding methods for the UE behavior and the base station behavior are provided as well.

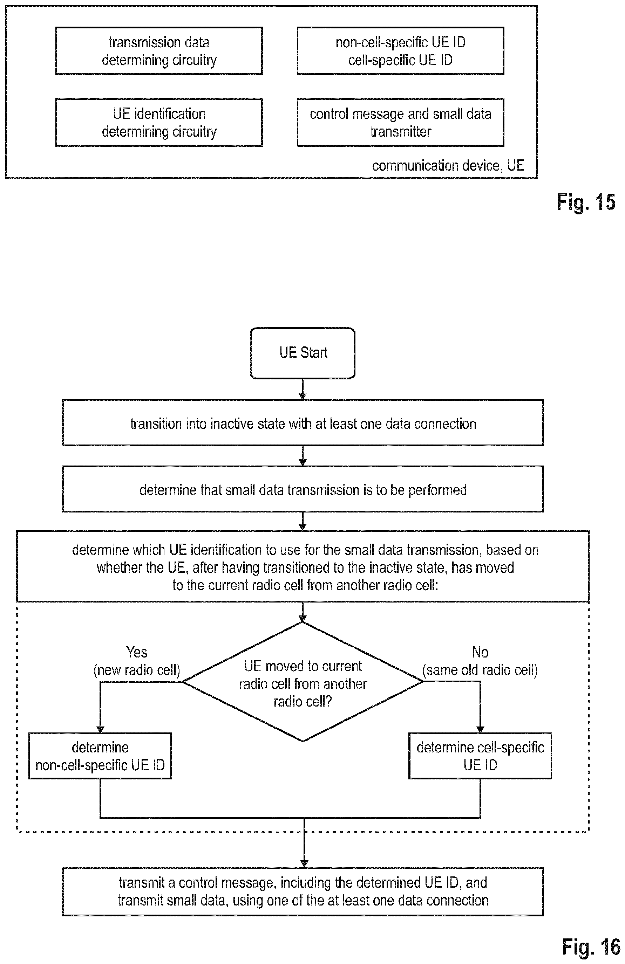

**Fig. 15** illustrates a simplified and exemplary UE structure according to one exemplary solution of the improved data transmission procedure, and can be implemented based on the general UE structure explained in connection with Fig. 14. The various structural elements of the UE illustrated in said figure can be interconnected between one another e.g. with corresponding input/output nodes (not shown) e.g. in order to exchange control and user data and other signals. Although not shown for illustration purposes, the UE may include further structural elements.

As apparent from Fig. 15, the UE may include transmission-data-determining circuitry, UE-identification determining circuitry as well as a corresponding non-cell-specific UE ID and a cell-specific UE ID, and a control-message and small-data transmitter.

In the present case as will become apparent from the below disclosure, the processing circuitry can thus be exemplarily configured to at least partly perform one or more of determining that a small-data transmission is to be performed, of determining which UE identification to use for the small-data transmission, of determining one of the non-cell-specific UE ID and cell-specific UE ID, etc.

The transmitter can thus be exemplarily configured to at least partly perform one or more of transmitting the small data and transmitting the selected UE ID, etc.

One solution as will be disclosed in more detail further below is implemented by a UE that includes the following. A processor of the UE determines that a transmission of small data is to be performed. It is exemplarily assumed that the UE is in an inactive state with at least one active data connection to a radio base station that controls a radio cell in which the UE is located. The UE is assigned at least with a cell-specific UE identification and a non-cell-specific UE identification. The processor determines which UE identification to use for the small-data transmission, based on whether the UE, after having transitioned to the inactive state, has moved to the current radio cell from another radio cell. In case the UE has moved to the current radio cell from another radio cell, the processor determines to use the non-cell-specific UE identification for the small-data transmission. In case the UE has not moved to the current radio cell from another radio cell, the processor determines to use the cell-specific UE identification for the small-data transmission. A transmitter of the UE transmits a control message including the determined UE identification and transmits the small data using one of the at least one data connection.

A corresponding sequence diagram for an exemplary UE behavior in line with the above-discussed UE is illustrated in **Fig. 16**. As apparent therefrom, it is initially assumed that the UE transitions to the inactive state. According to this improved data transmission procedure discussed herein, the UE has at least one data connection also when being in the inactive state, which can then be used in the subsequent procedure to transmit the data to the radio base station. According to one exemplary implementation, the corresponding radio base station also maintains the data connection, when the UE moves into the inactive state.

Furthermore, the UE may have several identifications, such as a cell-specific UE ID and a non-cell-specific UE ID. The cell-specific UE ID can be assigned e.g. by a radio base station in which the UE is located, and is primarily usable in that radio cell. When the UE moves between different radio cells, each radio base station, controlling the respective radio cell, may assign a different cell-specific UE ID to the UE. In addition, according to one example, the cell-specific UE ID can also be specific to small-data transmissions, such that it is to be used by the UE (and BS) in relation to a small data transmission but not for other types of data transmissions. Alternatively, or in addition, the cell-specific UE ID may be specific to the inactive state of the UE, such that it is to be used by the UE when in an inactive state, but not e.g. when the UE is in the connected state or the idle state.

On the other hand, the non-cell-specific UE ID can be assigned e.g. by a base station, in which radio cell the UE is located or by an entity of the core network (such as the Access and Mobility Management Function, AMF) and may be valid in a bigger geographical area than a radio cell, such as a Public Land Mobile Network, PLMN. In one exemplary implementation, the non-cell-specific UE ID may include an identification of the radio base station and an identification of the UE. In addition, according to another example, the non-cell-specific UE ID may be specific to the inactive state of the UE, such that it is to be used by the UE when in an inactive state, but not e.g. when the UE is in the connected state or the idle state.

Typically, cell-specific UE IDs are shorter than non-cell-specific UE IDs, because cell-specific UE IDs only need to respectively distinguish UEs being located in a same radio cell whereas non-cell-specific UE IDs need to distinguish many more UEs than those being located in one radio cell.

At some point of time while the UE is in the inactive state, it is assumed that small data becomes available for transmission such that the UE determines that a small-data transmission is to be performed. The small-data transmission also involves determining which UE identification to use. This is performed by the UE based on the current radio cell in which the UE is located and more specifically based on whether the UE, after having transitioned to the inactive state, has moved to the current radio cell from another radio cell or not. Put differently, determining which UE ID to use for the small-data transmission depends on whether or not the current radio cell of the UE is the same radio cell as when transitioning to the current inactive state. For instance, the UE, which was in radio cell A when it transitioned to the inactive state, may move between radio cells and may now be in another radio cell B when small data becomes available for transmission. This is correspondingly illustrated in Fig. 16, by the checks and boxes following the box including the text "determine which UE identification to use for the small-data transmission,..." (see dashed box in Fig. 16). The last block of Fig. 16 relates to the transmission of the control message and small data, and is performed after the determination.

Although in this exemplary improved data transmission procedure, the current radio cell will be the main basis for determining which UE identification to use for the small-data transmission, other variants and implementations of the improved data transmission procedure may use alternative or additional information as basis.

According to the UE behavior as exemplified in Fig. 16, the UE determines the non-cell-specific UE ID when it has determined that the UE has moved to the current radio cell from another radio cell, e.g. the UE changed radio cell while in inactive state. Conversely, the UE determines the cell-specific UE ID when it has determined that the UE has not moved to the current radio cell from anther radio cell, e.g. the UE stayed in the same radio cell while in inactive state.

After having decided on the UE ID, the UE may then proceed to perform the small-data transmission, which includes transmission of a control message including the determined UE ID as well as includes the transmission of the small data itself. The transmission of the small data can use one of the at least one non-suspended data connections that are available for the UE in the inactive state.

According to this improved data transmission procedure, it is possible for a UE that is in the inactive state to perform the transmission of data without having to transition to the connected state. This facilitates avoiding the above-mentioned disadvantages. In particular, the improved data transmission procedure facilitates avoiding delays, saving significant UE power and reducing the data overhead resulting from the state transition necessary in the prior art.

Moreover, the improved data transmission procedure appropriately selects the UE ID for the small-data transmission. In particular, the cell-specific UE ID, which is shorter than the non-cell-specific UE ID, is selected when the UE stayed in the same radio cell and thus the radio base station still knows the cell-specific UE ID. In the prior art, the UE might have used the non-cell-specific UE ID irrespective of which radio cell the UE is currently located in. Thus, the improved data transmission procedure benefits from using the shorter cell-specific UE ID when useful and thus has to transmit less data bits. On the other hand, the improved data transmission ensures that the radio base station in which the UE is located can properly identify the UE by using the non-cell-specific UE ID, e.g. when the UE has moved to another radio cell.

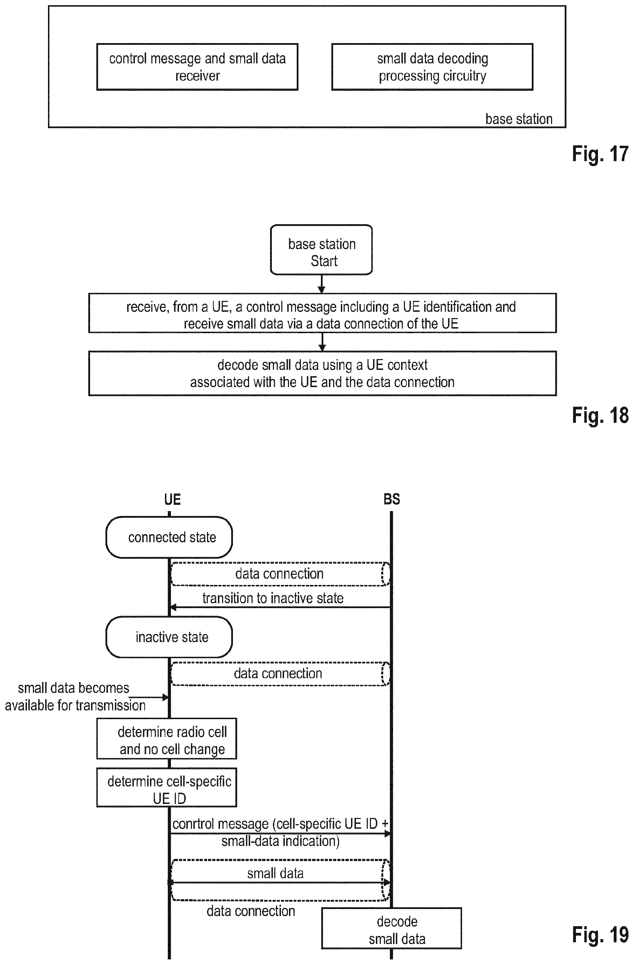

The improved data transmission procedure also provides an improved radio base station, which comprises the following. **Fig. 17** illustrates a simplified and exemplary base station structure according to one exemplary solution of the improved data transmission procedure, and can be implemented based on the general base station structure explained in connection with Fig. 14. The various structural elements of the radio base station illustrated in said figure can be interconnected between one another e.g. with corresponding input/output nodes (not shown) e.g. in order to exchange control and user data and other signals. Although not shown for illustration purposes, the base station may include further structural elements.

As apparent from Fig. 17, the base station may include a control-message and small-data receiver, and a small-data decoding processing circuitry. In the present case as will become apparent from the below disclosure, the processing circuitry can thus be exemplarily configured to at least partly perform one or more of decoding small data, etc. The receiver can thus be exemplarily configured to at least partly perform one or more of receiving the small data and the control message, comprising the UE ID.

One solution as will be disclosed in more detail further below is implemented by a radio base station that includes the following. The radio base station comprises a receiver, which receives, from a user equipment, UE, a control message including a UE identification. The receiver also receives, from the UE, small data using a data connection established with the UE. The UE is in an inactive state, wherein the UE identification is either a cell-specific UE identification or a non-cell-specific UE identification. A processor decodes the small data, using a UE context associated with the UE and the one data connection.

Correspondingly, the improved radio base station facilitates receiving small data from a UE in the inactive state, without having to transition the UE to the connected state, thus facilitating to avoid the disadvantages related therewith (see above discussion; delay, UE power, data overhead). The UE uses a corresponding data connection in the inactive state to transmit the data to the base station, and the base station receives and decodes the small data using the corresponding data connection at the base station side. According to one exemplary solution, also the base station maintains a data connection with the UE, when the UE is in the inactive state, so as to be able to properly receive and decode the small data.

The improved base station that participates in the improved data transmission procedure can be, 1) the same old radio base station to which the UE was already connected when transitioning to the inactive state (in short, old BS case), or 2) a new radio base station, to which the UE moved from the previous radio base station while being in the inactive state (in short, new BS case). Part of the behavior of the improved radio base station depends on whether the base station is the same old base station or a new base station.

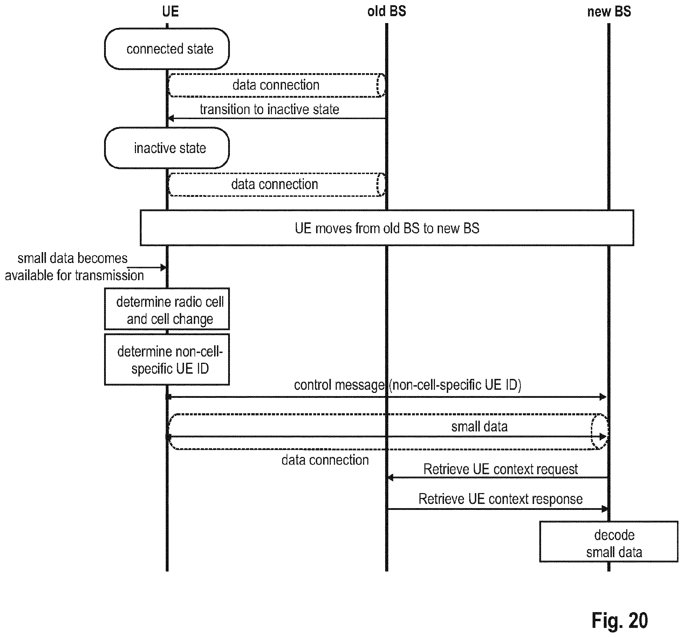

This will be explained exemplarily in connection with Fig. 19 and Fig. 20.

**Fig. 19** relates to the case in which no cell change occurred during the inactive state of the UE. As apparent therefrom, it is exemplarily assumed that the UE is initially in a connected state with at least one data connection established between the UE and the base station. Eventually, the base station decides to transition the UE into the inactive state, and correspondingly provides an instruction in said respect to the UE, which follows the instruction and transitions to the inactive state. As explained before, the UE when in the inactive state will also have a data connection available as illustrated in Fig. 19. Details on the data connection of the UE during the inactive state will be described later.

It is assumed that eventually small data becomes available for transmission. In line with the improved data transmission procedure, the UE determines which UE ID to transmit with the small data. In said respect, it concludes that it is still located in the same radio cell as when transitioning to the inactive state (i.e. no radio cell change occurred while in inactive state). Thus, the UE selects the cell-specific UE ID, which was assigned by the current base station. The base station thus is able to unambiguously identify the UE based on the cell-specific UE ID. The UE then transmits a corresponding control message, including the selected cell-specific UE ID, and transmits the small data using the data connection. Although illustrated separately in Fig. 19, in one example, the control message and small data are transmitted together to the base station, wherein the data connection is not necessarily used for transmitting the control message with the cell-specific UE ID. For instance, the control message and small data are transmitted together in the same transport block but using a signaling connection for the control message and a data connection for the data.

**Fig. 20** relates to the case in which a radio cell change occurred during the inactive state of the UE. In the same manner as explained in connection with Fig. 19, the UE is initially in a connected state with at least one data connection established between the UE and the base station. Eventually, the base station decides to transition the UE into the inactive state, and correspondingly provides an instruction in said respect to the UE, which follows the instruction and transitions to the inactive state. As explained before, the UE when in the inactive state will also have a data connection available to the (old) base station, as illustrated in Fig 20.

After transitioning into the inactive state, it is assumed here that the UE moves from the old base station to the radio cell of a new base station. After the radio cell change, it is further assumed that small data eventually becomes available for transmission, and the UE proceeds to perform the improved data transmission procedure discussed in the present application. Correspondingly, the UE concludes that it is located in a radio cell that is different from the radio cell it was located in when transitioning to the inactive state. Thus, in line with the UE behavior discussed above in connection with Fig. 16, the UE selects the non-cell-specific UE ID, which is such that the base station can unambiguously identify the UE. The UE transmits the corresponding control message, including the selected non-cell-specific UE ID, and transmits the small data using the data connection.

However, from the perspective of the new base station, no data connection exists yet with the UE, because the UE was previously connected with the old base station, not with the new base station. In order to decode the small data, the new base station can contact the old base station to retrieve the corresponding context(s) of the UE. The old base station can be determined e.g. from the non-cell-specific UE ID received in the control message. As apparent from the exemplarily procedure of Fig. 20, the new base station may transmit a request for retrieving the UE context to the old BS, and in return may receive from the old base station a response that includes the requested UE context(s). Typically, the UE context includes information (such as coding, security and encryption parameters associated with the UE and a data connection) that can be used for decoding the small data.

The above presented radio base station operates together with the UE to perform the improved data transmission procedure. The control message received from the UE may include a UE ID, either being a cell-specific UE ID or a non-cell-specific UE ID. The cell-specific UE ID is an ID that was assigned by a radio base station for identifying a UE in its radio cell, for instance by the radio base station to which the UE now transmits the small data or by another radio base station, to which the UE was previously connected and was thus assigned with a cell-specific UE ID.

According to another exemplary variant of the improved data transmission procedure, which can be combined with other variants and implementations of the improved data transmission procedure, a new timer is operated for the cell-specific UE ID as will be explained in more detail below. The radio base station that assigned the cell-specific UE ID to the UE needs to reserve the cell-specific UE ID for the UE, and thus cannot use same for identifying another UE. Since the cell-specific UE IDs are typically and advantageously short (e.g. around 16 bits), there may be the problem that there are not enough cell-specific UE IDs to be assigned to UEs that are or were connected to the base station. Therefore, a new UE-ID-validity timer can be operated by the UE and the base station to set a time period as the limit during which the cell-specific UE ID is being reserved by the base station for the UE, after it is not being actively used by the UE (because the UE transitioned into the inactive state).

According to one exemplary implementation of the variant, the new UE-ID validity timer can be started when the UE transitions into the inactive state.

The period of the new UE-ID validity timer can be for instance determined by the base station and then informed to the UE, e.g. in a control message, such as a RRC message. The determination of the base station may for instance depend on the number of unreserved cell-specific UE IDs that are still available for being assigned to UEs. For instance, the new UE-ID validity timer can be configured to expire, after 1024 seconds; but other values for the timer may be equally possible. Alternatively, the value of the UE-ID validity timer can be fixed by a corresponding 3GPP standard, and be hard-coded into the UE and base station.

After the UE-ID-validity timer expires for a particular cell-specific UE ID, the base station considers this expired cell-specific UE ID to no longer be associated with the UE but considers same to be available to be newly assigned to another UE. Thus, after expiry, the base station would not be able to identify the UE based on the expired cell-specific UE ID.

Conversely, the UE also operates the UE-ID-validity timer, preferably in synchronization with the base station, in order to know when the cell-specific UE ID expires at the base station side. An expired cell-specific UE ID should not be used by the UE when contacting the base station, because the base station will no longer have that expired cell-specific UE ID associated with the correct UE.

This variant of the improved data transmission procedure, using the new UE-ID-validity timer, provides the advantage that cell-specific UE IDs are only blocked for a limited (possibly configurable) amount of time by UEs that transition into inactive state. On the other hand, by still allowing the cell-specific UE ID to be valid for some time, the UE may use the cell-specific UE ID for procedures with the base station, such as the improved data transmission procedure discussed herein.

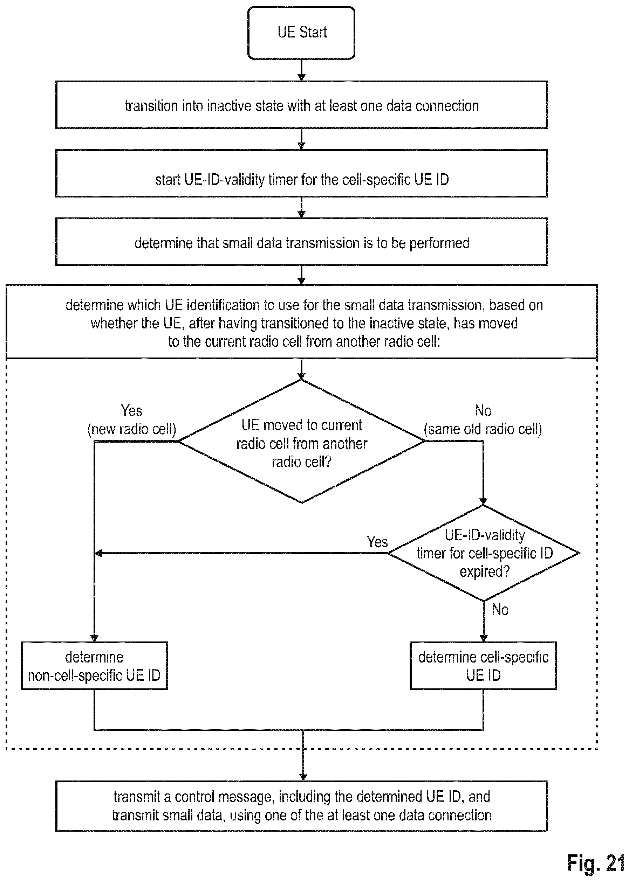

As a result, other variants of the improved data transmission procedure take the new UE-ID-validity timer into account, as will become apparent from the following. In particular, the UE behavior for determining the suitable UE ID to be transmitted together with the small data may depend on the UE-ID-validity timer. One particular exemplary implementation of the UE behavior is illustrated in **Fig. 21**. Fig. 21 differs from Fig. 16 in the additional process of starting the UE-ID-validity timer for the cell-specific UE ID, and by the additional check (see dashed box) as to whether the UE-ID-validity timer has expired or not for the cell-specific UE ID. In short, the cell-specific UE ID is not to be used when the ID has expired, e.g. when the corresponding UE-ID-validity timer has expired. In said case, even though the UE is still located in the same radio cell as when transitioning into the inactive state (No, same old radio cell-case in Fig. 21), the UE will select the non-cell-specific UE ID.

The sequence of checks to determine with UE ID to select based on both the current radio cell and the UE-ID-validity timer, as presented in Fig. 21, is only an example. Different implementations are equally possible. For instance, the UE might first check whether the UE-ID-validity timer expired for a cell-specific UE ID and then check whether it is located in the same old radio cell or a new radio cell. In a still different implementation, the UE may first check whether the UE-ID-validity timer expired for a cell-specific UE ID. Then, in case the UE-ID-validity timer expired, the UE may directly determine to use the non-cell-specific UE ID without the need to further check whether the UE is located in the same old radio cell or a new radio cell.

According to a further improvement of the new UE-ID-validity variant of the improved data transmission procedure, the timer can be restarted by the UE after the UE receives a response from the base station, relating to the small-data transmission. The same timer can be restarted by the base station after the base station responds to the small data transmission performed by the UE. This restarting of the timer can thus prolong the validity time, in case the UE transmits small data.

According to a further improved variant of the improved data transmission method, the control message, which already includes the UE ID, may further include an indication that small data is being transmitted together with the control message. This facilitates that the base station properly receives and decodes the small data, transmitted by the UE. Otherwise, the base station might not expect the small data and will not perform the corresponding processing to decode the small data. This variant is exemplarily illustrated in Fig. 19, where the control message is illustrated as including a small-data indication. In one example, the small-data indication can be one bit.

More specific implementations of the small-data indication are explained later in connection with a 5G NR based implementation of the improved data transmission procedure (see e.g. small-data cause and small-data indication in RRC message and MAC message).

Alternatively, another variant of the improved data transmission method does not have to rely on the small-data indication in the control message. In said variant, where no corresponding small-data indication is used in the control message, the base station may always be prepared that small data is being transmitted together with the control message from the UE. The base station may thus have to blindly perform decoding on the received signal. If small data is indeed transmitted together with the control message, the base station will successfully decode the small data. On the other hand, if no small data is transmitted together with the control message, the base station will not successfully decode any data. This variant is exemplarily illustrated in Fig. 20, where the control message is illustrated as not including a small-data indication, while the base station is still able to successfully decode the small data.

According to further variants of the improved data transmission procedure, which can be combined with other variants and implementations of the improved data transmission procedure, the base station, in response to the receiving the control message and small data, may decide to transmit a response message back to the UE. The base station may e.g. decide on the state the UE should be, e.g. stay in the inactive state, change to the connected or idle state. The decision by the base station may be based on e.g. one or more of the following: whether the base station can successfully retrieve UE's context, whether the transmitted small data is the end of a traffic burst (e.g., there is no more small-data transmission after this one), and the cause indicated in the control message. According to one example, the base station is able to determine that there is no more small data, based on whether there is a buffer status report after the small data. The buffer status report indicates that further small data is available for transmission, which could be one reason to transition the UE to the connected state.

As a result, the response message may include a corresponding UE-state indication for the UE. The UE receives this response message and follows the instruction therein to maintain or change into the indicated state.

According to a further variant that can be used in addition to the other variants, the response message from the base station to the UE can also schedule radio resources for the UE, which can be used by the UE to transmit further small data to the base station, e.g. in case the base station determined that the already transmitted small data is not the end of the traffic burst.

According to a further variant that can be used in addition to the other variants, the response message from the base station to the UE can also indicate a new cell-specific UE ID that is newly assigned by the base station to the UE. For instance, in scenarios where the new base station becomes the new anchor base station for the UE, the new anchor base station can assign a new cell-specific UE ID to the UE to be used by the UE while in the inactive state in the radio cell of the new anchor base station. The UE, when receiving the new cell-specific UE ID, can replace the old invalid cell-specific UE ID (assigned by the old base station) with the newly-assigned cell-specific UE ID, and use same in future communication with the new anchor base station.

A further variant that can be used in addition to the other variants, relates to how to react to a failure in the base station to properly identify a UE, based on the cell-specific UE ID received from the UE with the small data. In particular, it is exemplarily assumed that the UE stays in the same radio cell while in the inactive state, but that the gNB after some time releases the cell-specific UE ID such that it is no longer reserved for and associated with the UE. Assuming that this release is invisible to the UE, the UE would select the cell-specific UE ID for use in the small data transmission because it correctly determines that it is still located in the same old radio cell. The gNB however fails to properly identify the received cell-specific UE ID and thus fails to retrieve the relevant UE context for decoding the small data. In response, the gNB may transmit a response message to the UE indicating this failure, in response to which the UE then may transmit back the non-cell-specific UE ID. On the basis of the non-cell-specific UE ID, the base station may now proceed to retrieve the UE context and decode the small data.

In a further exemplary variant thereof, the base station may newly assign a cell-specific UE ID to the UE, and inform the UE accordingly about this newly-assigned cell-specific UE ID for future communication.

In the variants and implementations of the improved data transmission procedure described so far, it was assumed that the UE has a data connection available while the UE is in the inactive state, which then can be used for the small-data transmission. This can be achieved in different ways.

Typically, when the UE is in the connected state, it will have several active data connections that are used to exchange data and possibly other non-suspended data connections that are currently not used but still available for immediate use if needed.

According to a first variant, when transitioning into the inactive state, the UE does not suspend at least one of these data connections the UE had established when in the connected state. In other words, the UE maintains at least one data connection as non-suspended, and thus available for immediate use during the inactive state. The remaining data connections, which the UE had established in the connected state, can be suspended by the UE when transitioning into the inactive state. For instance, the UE may decide to not suspend one or more data connections associated with an application that is likely to cause a small-data transmission when in the inactive state. In another example, the UE may decide to not suspend the data connection that is being configured by base station as the default data connection fulfilling the minimal QoS requirement.

The base station will operate in a corresponding manner, by not suspending at least one of the data connections that were established with the UE, while the UE was in the connected state. The data connection maintained by the base station and the UE as non-suspended should be the same one, in order to facilitate the successful transmission and decoding of the small data transmitted using this common non-suspended data connection.

According to a second variant, when transitioning into the inactive state, the UE does not suspend any of the data connections that the UE had established with base station, i.e. UE maintains all data connections as non-suspended. The base station will operate in a corresponding manner, by not suspending any of the data connection that it had already established with the UE, while the UE was in connected state. Correspondingly, when the UE needs to transmit small data while in the inactive state, the UE selects the data connection suitable for the small data, and uses this selected data connection to carry the data to the base station. The base station will thus be able to properly receive and decode the small data received via the data connection, selected by the UE.

According to a third variant, when transitioning into the inactive state, the UE and base station both suspend all data connections of the connected state established between them. However, when transitioning to the inactive state, one or more new data connections can be created between the UE and the base station, which are kept in a non-suspended state while the UE is in the inactive state. For instance, a new data connection can be created specific for small-data transmissions that may occur while the UE is in the inactive state, e.g. the corresponding parameters associated with the new data connection being tailored for a small-data transmission.

This new data connection can be also be implemented as a default inactive-state-specific data connection, available in UEs that are in the inactive state. For instance, the parameters and settings related to the default data connection are hardcoded in to the UE (e.g. as defined by a 3GPP technical standard). The default data connection can then be created by the UE and base station automatically using these parameters and setting when the UE is transitioned to the inactive state.

According to exemplary solutions, the above-described different variants and implementations of the improved data transmission procedure (and combinations thereof) can be implemented in existing communication systems, such as the LTE, LTE-A, 5G NR communication systems. In the following, it is exemplary described how the improved data transmission procedure could be implemented in communication systems according to the 5G NR standards. To avoid repetition, reference is here made to the corresponding sections above dealing with different procedures and mechanisms of the 5G NR communications systems, e.g. as explained in connection with Fig. 1 to 13.

According to the above-described improved data transmission procedure, the UE is transmitting the small data as well as the control message, including the previously determined UE ID, to the radio base station. In one exemplary variant of the improved data transmission procedure, which can be combined with the other variants, the small data and control message are transmitted as part of a random access procedure. As presented in previous parts of the description, to which reference is made herewith, 3GPP 5G NR provides a 2-step RACH procedure and a 4-step RACH procedure. For instance, when performing a 2-step RACH procedure, the small data and control message can be transmitted as part of the first message (msgA) of the 2-step RACH procedure. The remaining 2-step RACH procedure as currently defined in 3GPP (reference is made to the corresponding part of the description above), can be adopted for the improved data transmission procedure, for instance including the transmission of MSGB by the base station and corresponding reception in the UE.

On the other hand, when performing a 4-step RACH procedure, the small data and control message can be transmitted as part of the third message (msg3) of the 4-step RACH procedure. The remaining 4-step RACH procedure as currently defined in 3GPP (reference is made to the corresponding part of the description above, see e.g. Fig. 6 and Fig. 7), can be adopted for the improved data transmission procedure. For instance, this includes the previous transmission of a preamble as the first step, then in the second step the reception of the RAR including a grant of limited radio resources for the transmission of msg3 in the third step, and in the last fourth step the potential contention resolution. The radio resources scheduled by the radio base station in the RAR are used by the UE to transmit both the small data and control message as the msg3. For instance, a typical grant size is 72 bits, which is used to carry both the control message and the small data. Accordingly, the bigger the control message, the less use data can be transmitted in the remaining msg3. Thus, it is important that the control message and specifically the carried UE ID is as small as possible to facilitate carrying more data in the remaining part of msg3 (for instance in the same transport block the UE builds using the granted radio resources; different data/signaling radio bearer being multiplexed together in the same transport block in the MAC layer, in line with Fig. 12).

In the RACH procedure of the prior art, the gNB only expects msg3 of the 4-step RACH procedure and msgA of the 2-step RACH procedure to include the RRC message, such as an RRCResumeRequest message. Thus, the gNB would not expect any small data to be transmitted with msg3, respectively msgA. On the other hand, the gNB according to the improved data transmission procedure should be prepared for both cases, namely the case that msg3/msgA only carries the control message and the case that the msg3/msgA carries the control message as well as small data.

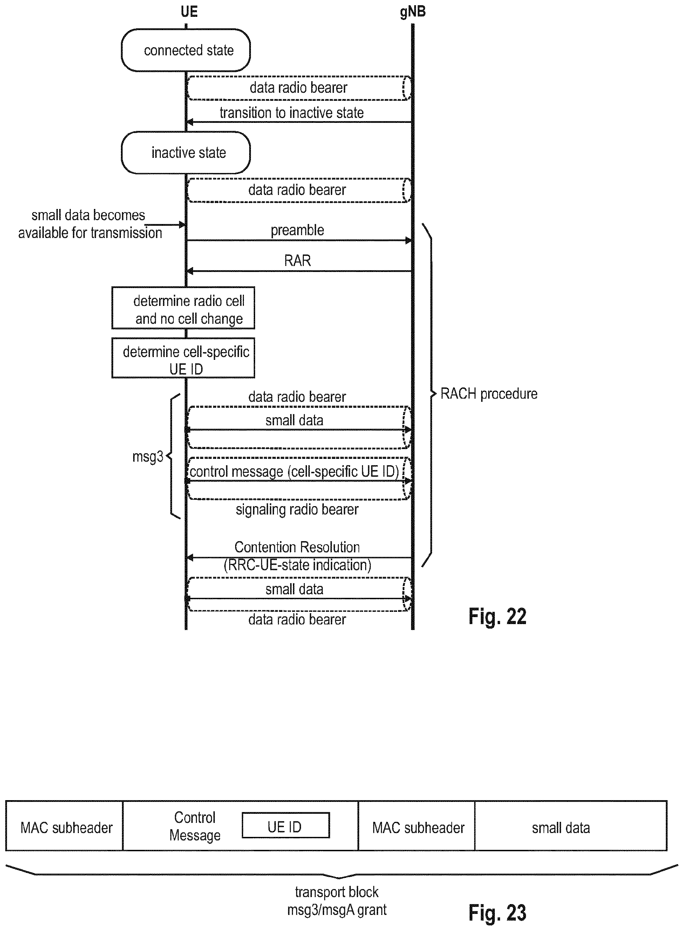

An exemplary implementation of this will be explained in connection with **Fig. 22**, which assumes that a 4-step RACH procedure is used for the small-data transmission. The message exchange of Fig. 22 is similar to the message exchange of Fig. 19, but embeds the exchange of messages in the RACH procedure. Correspondingly, after the small data becomes available for transmission, the RACH procedure is started for transmitting the small data. The RACH procedure involves the transmission of the preamble and the subsequent reception of the RAR (Random Access Response) by the UE. The RAR schedules radio resources which can be used by the UE for the msg3 transmission which comprises the transmission of the control message (e.g. using a signaling radio bearer, SRB1) and the small data (e.g. using a data radio bearer) (but e.g. multiplexed within the same transport block, constructed based on the scheduled radio resources).

For the exemplary message exchange of Fig. 22, it is further exemplarily assumed that the msg4 (Contention Resolution) of the RACH procedure comprises an RRC-UE-State indication for indicating to the UE in which state to be (explained in more detail e.g. at a previous part of the description).

For the exemplary message exchange of Fig. 22, it is further exemplarily assumed that the UE may transmit further small data in the uplink, e.g. using radio resources that are either scheduled within the msg4 of the RACH procedure, or scheduled after the msg4 transmission of the RACH procedure (e.g. by the PDCCH provided by the base station).

As described above for the improved data transmission procedure, a non-cell-specific UE ID or a cell-specific UE ID are transmitted in a control message together with the small data. In the following, numerous different possible UE IDs will be presented that can be respectively used as the non-cell-specific UE ID and cell-specific UE ID.

In 5G NR there is the I-RNTI and the short I-RNTI (see TS 38.331 v15.8.0 section 6.3.2), each of which could be used as the non-cell-specific UE ID. The I-RNTI has 40 bits, and is composed differently, depending on the I-RNTI reference profile. On the other hand, the short I-RNTI has less bits than the full I-RNTI, in particular 24 bits.

The following table shows the three different profiles for the full I-RNTI (see 3GPP TS 38.300 v16.0.0 annex C).

| **Profile ID** | **UE specific reference** | **NG-RAN node address index (e.g., gNB ID, eNB ID)** | **RAT-specific information** | **PLMN-specific information** | **Comment** |
|---|---|---|---|---|---|
| 1 | 20 bits (∼1 million values) | 20 bits (∼1 million values) | N/A | N/A | NG-RAN node address index may be very well represented by the LSBs of the gNB ID. |
| | | | | | This profile may be applicable for any NG-RAN RAT. |
| 2 | 20 bits (∼1 million values) | 16 bits (65.000 nodes) | N/A | 4 bits (Max 16 PLMNs) | Max number of PLMN IDs broadcast in NR is 12. |
| | | | | | This profile may be applicable for any NG-RAN RAT. |
| 3 | 24 bits (16 million values) | 16 bits (65.000 nodes) | N/A | N/A | Reduced node address to maximise addressable UE contexts. |
| | | | | | This profile may be applicable for any NG-RAN RAT. |

As apparent, the I-RNTI comprises different parts, a UE-specific reference (ID) and a NG-RAN node address (such as the gNB ID) as well as PLMN specific information for profile 2. The size of the full I-RNTI is quite large, thus taking much space of the msg3 (e.g. 72 bits available in total) grant or of the msgA PUSCH part (e.g. 200 bits available in total). As a result, less small data can be transmitted, making the small-data transmission less efficient. However, the full I-RNTI can uniquely identify a UE within e.g. the PLMN.

On the other hand, the short I-RNTI (can also be called Truncated I-RNTI) has only 24 bits, e.g. taking the 12 LBS from the UE-specific reference and the 12 LSB bits from the gNB ID. Correspondingly, the size of the short I-RNTI is significantly less than the size of the full I-RNTI, allowing more small data to be transmitted in the msg3 or msgA. However, UE ID collisions are more likely to occur, in specific deployment scenarios (such as when there are thousands of gNBs within a PLMN and/or when there are thousands of inactive UEs camping on one gNB).

In current 5G NR systems, the UE is configured by the gNB to use either the full or short I-RNTI (e.g. as part of SIB1). Thus, exemplary, the UE, when performing the improved data transmission procedure and deciding to use the non-cell-specific UE ID for the small-data transmission, uses the full or short I-RNTI in line with the indication from the gNB.

With respect to the cell-specific UE ID, there are several possibilities, such as using the UE-specific part of I-RNTI, the C-RNTI or a small-data-specific UE ID, as will be explained in the following. As discussed above, the cell-specific UE ID is used by the UE for the small-data transmission when staying in the same radio cell in which the cell-specific UE ID is valid. Put differently, the cell-specific UE ID, if possible, should not be used when the UE is in a new radio cell.

According to a first exemplary variant, the UE-specific part of the I-RNTI (see above table), which is 20 bits long, can be used as the cell-specific UE ID in the improved data transmission procedure. Correspondingly, the cell-specific UE ID is smaller than both options of the non-cell-specific UE ID. However, which bits of the full I-RNTI identify the UE (and which bits identify the gNB) may be invisible to legacy UEs (according to Release 15 or 16). According to one exemplary implementation in said respect, the gNB can additionally indicate to the UE from which bit to which bit inside the full I-RNTI identifies the UE.

According to a further second exemplary variant, the C-RNTI, which is 16 bits long, can be used as the cell-specific UE ID. The C-RNTI is even shorter than the above-discussed UE-specific part of the I-RNTI, and thus allows further improving the small-data transmission. In the current 5G NR communication systems, the gNB releases the C-RNTI of the UE at the time when the UE moves to the RRC_INACTIVE state. However, for the improved data transmission method, it would be necessary that the gNB keeps the C-RNTI even after the UE is transitioned to the RRC_INACTIVE, so as to allow the UE to use the C-RNTI as the cell-specific UE ID.

According to another third exemplary variant, a new UE ID for small-data transmission can be defined, which can be 16 bits or less. This allows to further reduce the number of bits spent for the UE ID in the small-data transmission, thus allowing more small data to be transmitted. However, defining and maintaining yet another UE ID requires more processing at the gNB side. In particular, the gNB can maintain another cell-specific UE ID pool (similar to the C-RNTI) just for facilitating small-data transmission when the UE is in the inactive state.

According to a variant of the improved data transmission procedure, already discussed above in connection with cell-specific UE IDs, a new UE-ID-validity timer can be used to limit the time a cell-specific UE ID is reserved by the gNB before releasing same to be available for re-assigning to another UE. This UE-ID-validity timer can be used e.g. in connection with the above-discussed C-RNTI and small-data-specific UE ID (second and third variants), such that it is possible to control when to release the C-RNTI (or small-data-specific UE ID) and avoid running out of C-RNTIs (or small-data-specific UE IDs). Considering that the UE-specific part of the I-RNTI (first variant) will not be reassigned, it is possible but not necessary to operate a UE-ID-validity timer when the UE-specific part of the I-RNTI is used as the cell-specific UE ID.

The new UE-ID-validity timer can also be realized by the timeAlignmentTimer. For instance, when the timeAlighmentTimer expires, UE is not allowed to use the cell-specific UE ID in the small data transmission procedure; otherwise the UE is allowed to use the cell-specific UE ID in the small data transmission procedure. The timeAlighmentTimer is maintained by both the gNB and the RRC_CONNECTED UE in a way that the timer is restarted every time when gNB sends the Timing Advanced Command (TAC) to the UE as a response to UE's uplink transmission.

As described above for the improved data transmission procedure, a control message is transmitted by the UE to the base station, including the selected UE ID. There are several different possibilities on how the control message can be implemented in a 5G NR communication system. In some exemplary implementations, one or more of the following variants of the control message can be implemented at the same time, and the UE then decides on which particular control message is used as the control message for the improved data transmission procedure.

The control message can be a message of the RRC protocol, which would be typical for what is currently done during the RACH procedure (see e.g. RRCResumeRequest message). Generally, RRC messages are beneficial because they are integrity protected. However, RRC messages tend to be of large size, and may thus be less efficient for the small-data transmission.

According to a first variant of the RRC control message, an RRCResumeRequest message as currently defined in 5G NR can be reused (e.g. the RRCResumeRequest or RRCResumeRequest1 message), by introducing a new cause value that indicates the small-data transmission as the cause for transmitting the RRCResumeRequest message. Correspondingly, in one example, the ResumeCause information element of TS 38.331 v15.8.0 section 6.3.2 can be extended as follows to accommodate the new cause value:

### ResumeCause information element

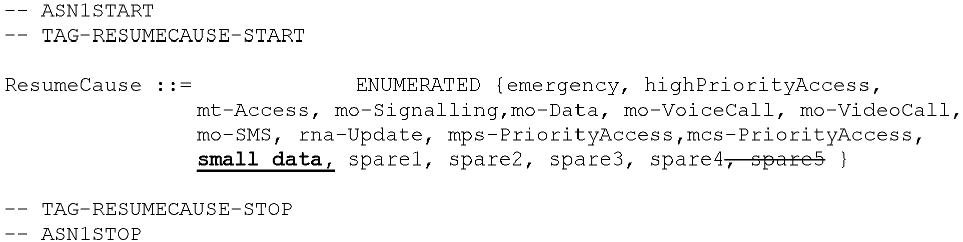

When the cause value indicates "smallData", the gNB expects that small data (user data) is appended after the RRCResumeRequest. The gNB thus knows exactly when small data is transmitted, and decoding of the small data is facilitated.

According to a second variant of the RRC control message, an RRCResumeRequest message as currently defined in 5G NR can be reused (e.g. the RRCResumeRequest or RRCResumeRequest1 message), by introducing a new and separate small-data indication parameter. This new small-data indication indicates to the gNB whether small data is transmitted together with this RRCResumeRequest message or not. Correspondingly, in one example, the information element for the RRCResumeRequest or RRCResumeRequest1 of TS 38.331 section 6.2.2 can be extended as follows to accommodate the small-data indication.

### RRCResumeRequest message

| | |
|---|---|
| -- ASN1START | |
| -- TAG-RRCRESUMEREQUEST-START | |
| RRCResumeRequest ::= | SEQUENCE { |
| rrcResumeRequest | RRCResumeRequest-IEs |
| } | |
| RRCResumeRequest-IEs ::= | SEQUENCE { |
| resumeIdentity | ShortI-RNTI-Value, |
| resumeMAC-I | BIT STRING (SIZE (16)), |
| resumeCause | ResumeCause, |
| smallData | Boolean |
| } | |
| -- TAG-RRCRESUMEREQUEST-STOP | |
| -- ASN1STOP | |

### RRCResumeRequest1 message

| | |
|---|---|
| -ASN1START | |
| TAG-RRCRESUMEREQUEST1-START | |
| RRCResumeRequest1 ::= SEQUENCE { | |
| rrcResumeRequest1 | RRCResumeRequest1-IEs |
| } | |
| RRCResumeRequest1-IEs ::= | SEQUENCE { |
| resumeIdentity | I-RNTI-Value, |
| resumeMAC-I | BIT STRING (SIZE (16)), |
| resumeCause | ResumeCause, |
| smallData | Boolean |
| } | |
| -- TAG-RRCRESUMEREQUEST1-STOP | |
| -- ASN1STOP | |

As apparent from the above, the smallData indication would be 1-bit long. For example, when the new smallData indication indicates true, the gNB expects that small data (user data) is appended after the RRCResumeRequest. The gNB thus knows exactly when small data is transmitted, and decoding of the small data is facilitated.

According to a third variant of the RRC control message, an RRCResumeRequest message as currently defined in 5G NR can be reused (either the RRCResumeRequest or RRCResumeRequest1 message), without any further adaptation. Compared to the first and second variants that also relied on the RRCResumeRequest message, the RRCResumeRequest message according to the third variant does not indicate anything relating to the small-data transmission. The gNB, when receiving the RRCResumeRequest thus does not know whether small data is also transmitted or not. Therefore, the gNB has to be prepared for both cases, the first case being that no small data is transmitted together with the RRCResumeRequest, and the second case being that small data is transmitted together with the RRCResumeRequest. For instance, the gNB will try to successfully decode any bits that are transmitted together with the RRCResumeRequest as to whether they constitute the transmission of small data or only spare bits.

According to a fourth variant, a new RRC message is defined for the purpose of a small data transmission while in the UE inactive state. Since this new RRC message will be used by the UE for the small-data transmission, the gNB expects that there is further user data (the small data) appended after this new RRC message.

In the following, an exemplary new RRC message RRCSmallDataTX is presented:

| | | |
|---|---|---|
| RRCSmallDataTx ::= | SEQUENCE { | |
| rrcSmallDataTx | | RRCSmallDataTx-IEs |
| } | | |
| RRCSmallDataTx-IEs ::= | SEQUENCE { | |
| UE-Identity | | CHOICE { |
| shortResumeldentity | | shortl-RNTI-Value, |
| fullResumeIdentity | | I-RNTI-Value, |
| ueSpecificldentity | | UE-I-RNTI-Value |
| } | | |
| resumeMAC-I | BIT STRING (SIZE (16)) | |
| } | | |

In the above example of the RRCSmallDataTx message, the UE-Identity information element (IE) uses the CHOICE structure so as to allow the UE to choose among different UE ID formats. In order to avoid repetition, reference is made to the above discussion on the different 5G NR compliant implementations of the non-cell-specific UE and the cell-specific UE ID, such as the full I-RNTI (in above message "I-RNTI-Value"), the short I-RNTI (in above message "shortl-RNTI-Value"), and the UE-specific-part of I-RNTI (in above message "UE-I-RNTI-Value"). In the above example, the UE would select either the full or short I-RNTI as the non-cell-specific UE ID, and would have only one option for the cell-specific UE ID, particularly the UE-specific part of the I-RNTI.

In the above solutions, the control message was a message of the RRC protocol. Other variants of the improved data transmission procedure use a message of the MAC protocol as the control message. It should be noted that MAC Control Elements are typically not integrity protected and thus less secure that RRC messages. Nevertheless, MAC messages can be smaller in size, which leads to less control overhead such that more small-data can be transmitted instead.

One possible implementation of the MAC control message is based on a new MAC CE format to carry one of the possible UE IDs mentioned above. A new LCID (Logical Channel ID) value is reserved for the new MAC CE so as to be indicated in the MAC subheader.

In case the C-RNTI is used as the cell-specific UE ID, the already existing C-RNTI MAC CE can be reused (see TS 38.321 v15.8.0 section 6.1.3.2). However, by reusing this existing C-RNTI MAC CE, no additional small-data indication or cause can be transmitted to the gNB. The gNB thus needs to be prepared to decode small data after receiving a C-RNTI MAC CE. However, the gNB may implicitly understand that the UE is transmitting small data when receiving such a C-RNTI MAC CE as part of the RACH procedure (which normally would include an RRC message).

According to further variants, the gNB may decide which UE state is the most appropriate for the UE and then transmit a corresponding RRC-UE-state indication back to the UE as part of a response message (see UE-state indication variant discussed above). According to one exemplary implementation, the decision of the gNB can be based on one or more of the following:-the resume cause indicated in the RRCResumeRequest, whether user data is appended after the RRCResumeRequest, whether the appended user data is the end of the traffic.

The response message can be either a new message defined for said purpose and being able to carry the corresponding RRC-UE-state indication.

In other solutions, an already existing RRC message can be reused. For instance, when using the RRCResumeRequest message as the control message, the gNB may respond using the RRCResume message, e.g. as part of the RACH procedure in msg4 (4-step RACH; see Fig. 22) or msgB (2-step RACH).

The RRCResume message would indicate the RRC UE state in which the UE should be. The currently-defined RRCResume message of 5G NR in TS 38.331 v15.8.0 section 6.2.2 can be extended e.g. with the parameter "ue-RRCState" as follows:

### RRCResume message

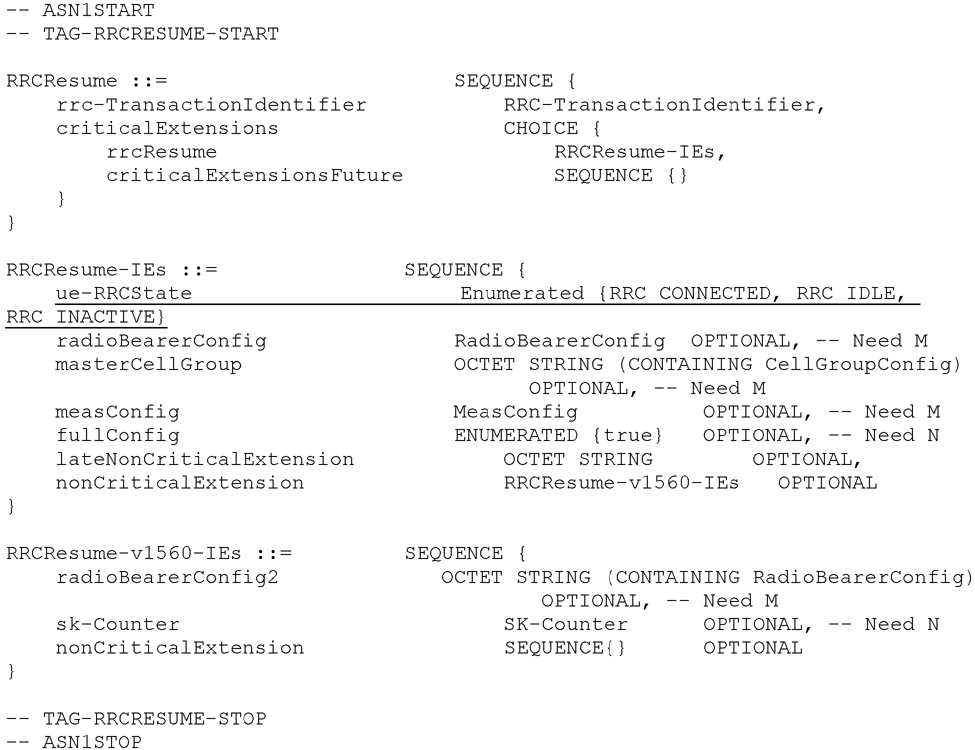

The new parameter "ue-RRCstate" indicates the UE to either stay in RRC_INACTIVE state (e.g., then there is no more small data from the UE), transition to RRC_IDLE state (e.g., when the UE context retrieval fails), or transition to RRC_CONNECTED (e.g., when there are still some data pending for transmission at the UE side).

**Fig. 23** illustrates an exemplary structure of the msg3/msgA according to the improved data transmission procedure. It is exemplarily assumed that the msg3/msgA comprises a MAC control message with a UE ID (such as the C-RNTI), as well as the small data as another MAC CE. The whole msg3/msgA is a transport block which corresponds to the radio resources granted by the base station scheduler.

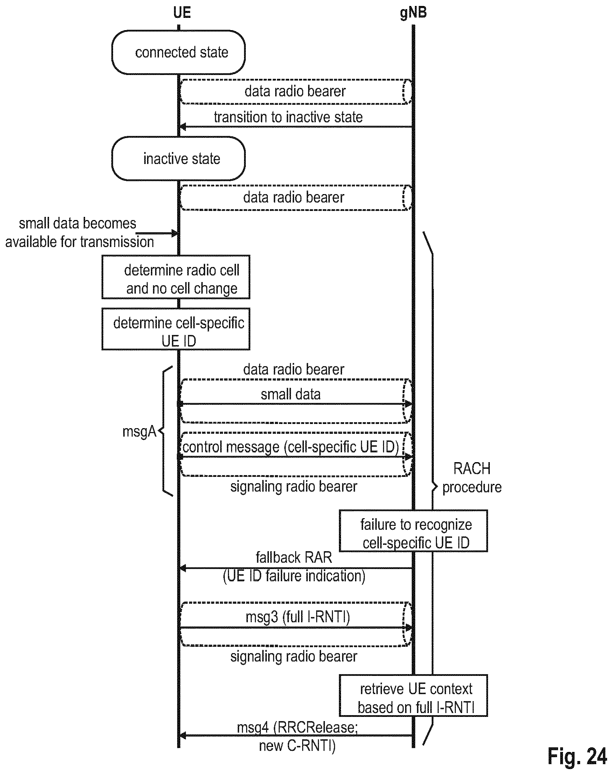

A further variant improves the data transmission procedure, e.g. when using the 2-step RACH to perform the small-data transmission. This variant concerns cases where the gNB receives the control message (here e.g. mgsA), comprising the cell-specific UE ID (e.g. the C-RNTI) but cannot properly identify the UE based on this cell-specific UE ID. This improved variant will be explained in connection with **Fig. 24**. Fig. 24 illustrates an exemplary message exchange between the UE and the gNB, similar to Fig. 22, based however on a 2-step RACH procedure. Correspondingly, the UE transmits the control message, including the cell-specific UE ID, as well as the small data as part of the first message, msgA. The gNB fails to recognize the cell-specific UE ID, e.g. cannot identify the UE based on the cell-specific UE ID.

One reason may be that the C-RNTI was released by the gNB and is no longer associated with the UE ID, e.g. because of the long time the UE was in the inactive state before starting the small data transmission. Correspondingly, similar to the UE-ID-validity timer variant, this improved variant allows the gNB to release cell-specific UE IDs (e.g. the C-RNTI of this example) after some time. As such, this variant could be seen as a mechanism in addition or alternative to the UE-ID-validity timer variant.

In case the gNB fails to recognize the cell specific UE ID, the gNB sends back a fallback random access response message, which may indicate the cause of triggering this fallback mechanism, e.g. the failure to identify the UE based on a cell-specific UE ID and thus the failure to fetch a corresponding UE context (stored either locally or at another gNB, the anchor gNB). The UE, upon receiving this fallback RAR message with the failure indication, switches to the 4-step RACH procedure and proceeds by transmitting the msg3 including the full I-RNTI. This in turn allows the gNB to properly identify the UE and to retrieve the correct UE context based on the full I-RNTI. The 4-step RACH procedure can be completed by transmitting the RRCRelease message as part of msg4.

According to one further example, the msg4 may also indicate a new cell-specific UE ID, such as a new C-RNTI. The new cell specific UE ID is assigned by the gNB to the UE, because the old C-RNTI is not valid anymore and should not be used by the UE. Instead, in future communication with the gNB, the UE uses the newly assigned cell specific UE ID (e.g. C-RNTI).

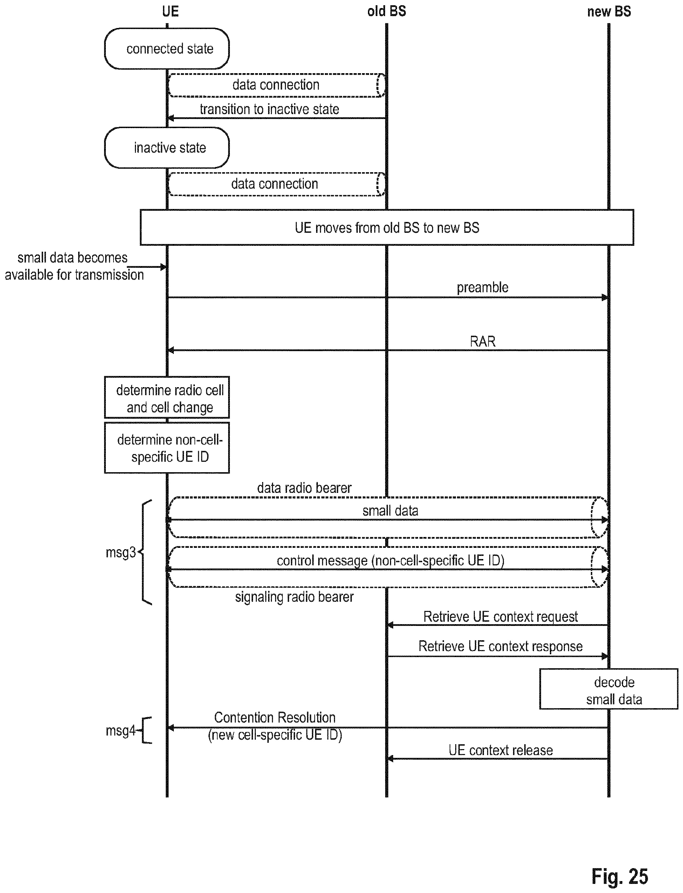

A further variant of the improved data transmission method will be explained in connection with **Fig. 25**, which illustrates the message exchange between the UE, the old anchor gNB and the new gNB to which the UE moved while in the inactive state. This improved variant of the data transmission method uses the 4-step RACH procedure to convey the small data in msg3. Msg3 also comprises the control message with a non-cell specific UE ID (such as the full I-RNTI or short I-RNTI).

It is assumed that the new gNB retrieves the necessary UE context from the old gNB and uses the retrieved UE context to decode the small data. The new gNB thus becomes the new anchor gNB for the UE and may assign a particular cell-specific UE ID to the UE. The corresponding msg4 of the RACH procedure may thus carry the newly assigned cell-specific UE ID. The newly assigned cell specific UE ID can then be used by the UE in future communication with the new gNB (e.g. for a further small-data transmission).

Although not illustrated in Fig. 25, msg4 may additionally comprise a new non-cell-specific UE ID assigned to the UE, e.g. in cases where the new gNB belongs to a different RAN notification area than the old gNB.

In a different scenario, the (presumably-new) gNB is indeed the anchor gNB for the UE, e.g. when the UE is located in a new radio cell which however belongs to the same gNB as the previous radio cell. Also in such a case, the UE will transmit the control message with the non-cell-specific UE ID, such as the full I-RNTI, although it may have used the cell-specific UE ID instead. In response to the control message, the gNB may respond by sending the cell-specific UE ID to the UE, thereby indicating that the gNB is also the anchor gNB for the UE for the new radio cell. Correspondingly, the UE thereby is made aware that the new radio cell belongs to the same gNB as before, and in future communication (such as a new small-data transmission), the UE can use the short cell-specific UE ID.

In the above described variants and implementations of the improved data transmission procedure, the UE, when determining which UE ID to use for the small-data transmission, determines whether, after having transitioned to the inactive state, it has moved to a new radio cell or not. In exemplary variants of the improved data transmission method, the determination of the radio cell in which the UE is currently located can be performed as follows. Radio base stations may broadcast signals (such as synchronization signals or system information) in their radio cells, these signals being such that they allow determining the ID of the radio base station (or radio cell). The UE, when in the inactive state, receives the signals and is able to determine the radio cell it is currently located in. For instance, in an exemplary 5G NR implementation primary and secondary synchronization signals (see SS/PBCH blocks; Synchronization Signal / Physical Broadcast Channel blocks) are transmitted by the gNB and correspondingly decoded by the UE, which allows to identify the time slot and physical cell ID of the camped radio cell (see 3GPP TS 38.211v16.0.0 e.g. sections 7.4.2 and 7.4.3).

In such 5G NR implementation, the UE identifies the radio cell based on the physical cell ID (PCI), but does not identify the based station (gNB). In deployments where one gNB control several radio cells, the UE would not be able to know that the new radio cell (after the cell change while in inactive state) belongs to the same gNB as the previous radio cell before the radio cell change (cell reselection). In the improved data transmission procedure, the UE would thus still use the non-cell-specific UE ID to be transmitted with the small data.

Numerous variants and implementations of the improved data transmission procedure have been described. Some of these have been described separately from one another in order to be facilitate the understanding and benefits of the respective variant or implementation. However, it is equally possible to combine two or more of the variants and implementations of the improved data transmission procedure together to form new variants and implementations of the improved data transmission procedure. Without being exhaustive, and to just mention a few: small-data-indication variants, UE-ID-validity-timer variants, UE-state-indication variants, fallback-RAR variants, different variants of control messages, different variants of cell-specific UE IDs and non-cell-specific UE IDs, different variants of data connections by the UE.

### Further Aspects

According to a first aspect, a user equipment, UE, is provided comprising a processor, which determines that a transmission of small data is to be performed. The UE is in an inactive state with at least one data connection to a radio base station that controls a radio cell in which the UE is located. The UE is assigned at least with a cell-specific UE identification and a non-cell-specific UE identification. The processor determines which UE identification to use for the small data transmission, based on whether the UE, after having transitioned to the inactive state, has moved to the current radio cell from another radio cell. In case the UE has moved to the current radio cell from another radio cell, the processor determines to use the non-cell-specific UE identification for the small data transmission. In case the UE has not moved to the current radio cell from another radio cell, the processor determines to use the cell-specific UE identification for the small data transmission. A transmitter transmits a control message including the determined UE identification and transmits the small data using one of the at least one data connection.

According to a second aspect provided in addition to the first aspect, the processor operates an UE-ID-validity timer for the cell-specific UE identification. The processor starts the UE-ID-validity timer, when the UE transitions from a connected state to the inactive state. The processor, when determining which UE identification to use for the small data transmission, also considers the UE-ID-validity timer for the cell-specific UE identification. In case the UE-ID-validity timer has expired for the cell-specific UE identification, the processor determines not to use the expired cell-specific UE identification but to use the non-cell-specific UE identification. In an optional implementation, in case the UE-ID-validity timer has expired for the cell-specific UE identification, the processor does not determine which UE identification to use based on whether the UE, after having transitioned to the inactive state, has moved to the current radio cell from another radio cell.

According to a third aspect provided in addition to the first or second aspect, the control message is of the Medium Access Control, MAC, protocol, In an optional implementation, in case the determined cell-specific UE identification is a Cell Radio Network Temporary Identifier, C-RNTI, the control message is a C-RNTI MAC Control element message according to the 3GPP 5G NR standard. In an optional implementation, the MAC message indicates the small data transmission as the cause for transmitting the MAC message.

In an alternative implementation to the above MAC control message, the control message is of the Radio Resource Control, RRC, protocol, specifically one of the following:
- an RRC Resume Request message, including a cause for transmitting the RRC Resume Request message, wherein the cause indicates a small data transmission as the cause for transmitting the RRC Resume Request message,
- an RRC Resume Request message, including a cause for transmitting the RRC Resume Request message and including a small data indication,
- an RRC Resume Request message, without including a small data indication and without indicating a small data transmission as the cause for transmitting the RRC Resume Request message,
- a small-data-specific RRC message.

According to a fourth aspect provided in addition to one of the first to third aspects, the cell-specific UE identification is:
- a UE-specific part of an Inactive Radio Network Temporary Identifier, I-RNTI, the I-RNTI being assigned to a UE in an inactive state, optionally having 20 bits,
- a Cell Radio Network Temporary Identifier, C-RNTI, optionally having 16 bits,
- small-data-transmission-specific identification, optionally having 16 bits or less.

The non-cell-specific UE identification is:
- a full Inactive Radio Network Temporary Identifier, I-RNTI, optionally having 40 bits,
- a truncated I-RNTI, consisting of a UE-specific part of the full I-RNTI and a network-specific part of the full I-RNTI, optionally having 24 bits,

In an optional implementation, the processor determines to use the full I-RNTI or the truncated I-RNTI as the non-cell-specific UE identification, based on a configuration provided by the radio base station.

According to a fifth aspect, provided in addition to one of the first to fourth aspects, the control message and small data are transmitted as part of a first message of a two-step random access procedure performed between the UE and the radio base station. In an optional implementation, the control message further includes an indication that small data is being transmitted as part of the first message.

In an alternative implementation to the above two-step random access procedure, the control message and small data are transmitted as part of a third message of a four-step random access procedure between the UE and the radio base station. In an optional implementation, the control message further includes an indication that small data is being transmitted as part of the third message.

According to a sixth aspect, provided in addition to one of the first to fifth aspects, a response message from the radio base station received in response to the control message includes an indication for the UE to stay in the inactive state or to transition to one of a connected state or an idle state.

In an optional implementation, the response message further indicates uplink radio resources to be used for transmitting data. The transmitter transmits further small data to the radio based station using the indicated uplink radio resources.

In a further optional implementation, the response message further indicates a new cell-specific UE ID, different from the already assigned cell-specific UE ID. The processor uses in future communication the newly-assigned cell-specific UE ID instead of the previously-assigned cell-specific UE ID.

According to a seventh aspect provided in addition to one of the first to sixth aspects, the transmitter transmits a control message including the cell-specific UE ID to the radio base station. A receiver receives a failure indication from the radio base station, indicating that the radio base station failed to identify the UE based on the cell-specific UE ID. The transmitter transmits a message including the non-cell-specific UE ID to the radio base station.

In an optional implementation, the receiver receives a new cell-specific UE ID from the radio base station, and the processor replaces the previous cell-specific UE ID with the newly-assigned cell-specific UE ID.

According to an eighth aspect provided in addition to one of the first to seventh aspects, the processor, when transitioning to the inactive state, does not suspend at least one data connection the UE had maintained in the connected state. In an optional implementation, the non-suspended at least one data connection is specific to the transmission of small data.

Alternatively, the processor, when transitioning to the inactive state, does not suspend any of the data connections the UE had maintained in the connected state.

Alternatively, the processor, when transitioning to the inactive state, suspends all data connections the UE had maintained in the connected state and creates a new data connection specific to the transmission of small data.

According to a ninth aspect, a method is provided comprising the following steps performed by a user equipment, UE. The UE determines that a transmission of small data is to be performed. The UE is in an inactive state with at least one data connection to a radio base station that controls a radio cell in which the UE is located. The UE is assigned at least with a cell-specific UE identification and a non-cell-specific UE identification. The UE determines which UE identification to use for the small data transmission, based on whether the UE, after having transitioned to the inactive state, has moved to the current radio cell from another radio cell. In case the UE has moved to the current radio cell from another radio cell, the UE determines to use the non-cell-specific UE identification for the small data transmission. In case the UE has not moved to the current radio cell from another radio cell, the UE determines to use the cell-specific UE identification for the small data transmission. The UE transmits a control message including the determined UE identification and transmitting the small data using one of the at least one data connection.

According to a tenth aspect, a base station is provided comprising the following. A receiver receives, from a user equipment, UE, a control message including a UE identification and receives, from the UE, small data via a data connection established for the UE. The UE is in an inactive state. The UE identification is either a cell-specific UE identification or a non-cell-specific UE identification. A processor decodes the small data, using a UE context associated with the UE and the one data connection.

According to an eleventh aspect, provided in addition to the tenth aspect, the UE context is either stored locally within the radio base station, or retrieved from another radio base station.

According to a twelfth aspect, provided in addition to the tenth or eleventh aspect, the UE is in a connected state having at least one data connection already established between the UE and the radio base station. The processor determines to transition the UE into an inactive state. A transmitter instructs the UE to transition into the inactive state. The processor determines to not suspend the at least one data connection already established between the UE and the radio base station in the connected state. The one data connection used for the small data transmission is one of the non-suspended at least one data connection.

In an optional implementation, the non-suspended at least one data connection is specific to the transmission of small data.

Alternatively, the processor, when transitioning the UE to the inactive state, does not suspend all data connections already established between the UE and the radio base station in the connected state. The one data connection used for the small data transmission is one of the non-suspended data connections.

Alternatively, the processor, when transitioning the UE to the inactive state, suspends all data connection already established between the UE and the radio base station in the connected state, and establishes the one data connection with the UE, optionally wherein the newly established one data connection is specific to the transmission of small data.

According to a thirteenth aspect, provided in addition to one of the tenth to twelfth aspects, the processor determines that the UE, after having transitioned to the inactive state, has moved to the radio base station from a different radio base station, based on the received UE identification, the UE identification being a non-cell-specific UE identification. The processor determines the different radio base station, based on the non-cell-specific UE identification. The radio base station comprises a transmitter, which transmits, to the different radio base station, a request for a context of the UE. The receiver receives, from the different radio base station, a response including the context of the UE. The processor decodes the received small data using the received context of the UE.

According to a fourteenth aspect, provided in addition to one of the tenth to thirteenth aspects, the cell-specific UE identification is assigned by the radio base station to the UE. The processor operates a UE-ID-validity timer for the cell-specific UE identification. The processor starts the UE-ID-validity timer, when the UE transitions from a connected state to the inactive state. The processor, when determining that the UE-ID-validity timer has expired for the cell-specific UE identification, considers the value of the cell-specific UE identification to no longer be associated with the UE but to be available for association with another UE.

According to a fifteenth aspect, provided in addition to one of the tenth to fourteenth aspects, the transmitter transmits a response message to the UE in response to the received control message. The response message includes an indication instructing the UE to stay in the inactive state or to transition to one of a connected state or an idle state.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a processor, which in operation, determines that a transmission of small data is to be performed,
wherein the UE is in an inactive state with at least one data connection to a radio base station that controls a radio cell in which the UE is located, and wherein the UE is assigned at least with a cell-specific UE identification and a non-cell-specific UE identification,
the processor, which in operation, determines which UE identification to use for the small data transmission, based on whether the UE, after having transitioned to the inactive state,
has moved to the current radio cell from another radio cell,
in case the UE has moved to the current radio cell from another radio cell,
∘ the processor, when in operation, determines to use the non-cell-specific UE identification for the small data transmission,
in case the UE has not moved to the current radio cell from another radio cell,
∘ the processor, when in operation, determines to use the cell-specific UE identification for the small data transmission,
a transmitter, which in operation, transmits a control message including the determined UE identification and transmits the small data using one of the at least one data connection.

2. The user equipment according to claim 1, wherein the processor, when in operation, operates an UE-ID-validity timer for the cell-specific UE identification,
wherein the processor, when in operation, starts the UE-ID-validity timer, when the UE transitions from a connected state to the inactive state,
wherein the processor, when determining which UE identification to use for the small data transmission, also considers the UE-ID-validity timer for the cell-specific UE identification,
in case the UE-ID-validity timer has expired for the cell-specific UE identification, the processor determines not to use the expired cell-specific UE identification but to use the non-cell-specific UE identification,
optionally wherein in case the UE-ID-validity timer has expired for the cell-specific UE identification, the processor does not determine which UE identification to use based on whether the UE, after having transitioned to the inactive state, has moved to the current radio cell from another radio cell.

3. The user equipment according to claim 1 or 2,
wherein the control message is of the Medium Access Control, MAC, protocol,
optionally wherein, in case the determined cell-specific UE identification is a Cell Radio Network Temporary Identifier, C-RNTI, the control message is a C-RNTI MAC Control element message according to the 3GPP 5G NR standard,
optionally wherein the MAC message indicates the small data transmission as the cause for transmitting the MAC message,
or
wherein the control message is of the Radio Resource Control, RRC, protocol, specifically one of the following:
an RRC Resume Request message, including a cause for transmitting the RRC Resume Request message, wherein the cause indicates a small data transmission as the cause for transmitting the RRC Resume Request message,
an RRC Resume Request message, including a cause for transmitting the RRC Resume Request message and including a small data indication,
an RRC Resume Request message, without including a small data indication and without indicating a small data transmission as the cause for transmitting the RRC Resume Request message,
a small-data-specific RRC message.

4. The user equipment according to any of claims 1 to 3, wherein the cell-specific UE identification is:
a UE-specific part of an Inactive Radio Network Temporary Identifier, I-RNTI, the I-RNTI being assigned to a UE in an inactive state, optionally having 20 bits,
a Cell Radio Network Temporary Identifier, C-RNTI, optionally having 16 bits,
small-data-transmission-specific identification, optionally having 16 bits or less, and
wherein the non-cell-specific UE identification is:
a full Inactive Radio Network Temporary Identifier, I-RNTI, optionally having 40 bits,
a truncated I-RNTI, consisting of a UE-specific part of the full I-RNTI and a network-specific part of the full I-RNTI, optionally having 24 bits,
optionally wherein the processor determines to use the full I-RNTI or the truncated I-RNTI as the non-cell-specific UE identification, based on a configuration provided by the radio base station.

5. The user equipment according to any of claims 1 to 4, wherein the control message and small data are transmitted as part of a first message of a two-step random access procedure performed between the UE and the radio base station,
optionally wherein the control message further includes an indication that small data is being transmitted as part of the first message,
or
wherein the control message and small data are transmitted as part of a third message of a four-step random access procedure between the UE and the radio base station,
optionally wherein the control message further includes an indication that small data is being transmitted as part of the third message.

6. The user equipment according to any of claims 1 to 5, wherein a response message from the radio base station received in response to the control message includes an indication for the UE to stay in the inactive state or to transition to one of a connected state or an idle state,
optionally wherein the response message further indicates uplink radio resources to be used for transmitting data, wherein the transmitter, when in operation, transmit further small data to the radio based station using the indicated uplink radio resources,
optionally wherein the response message further indicates a new cell-specific UE ID, different from the already assigned cell-specific UE ID, and wherein the processor, when in operation, uses in future communication the newly-assigned cell-specific UE ID instead of the previously-assigned cell-specific UE ID.

7. The user equipment according to any of claims 1 to 6, wherein the transmitter transmits a control message including the cell-specific UE ID to the radio base station, wherein a receiver, when in operation, receives a failure indication from the radio base station, indicating that the radio base station failed to identify the UE based on the cell-specific UE ID,
wherein the transmitter, when in operation, transmits a message including the non-cell-specific UE ID to the radio base station,
optionally wherein the receiver, when in operation, receives a new cell-specific UE ID from the radio base station, and the processor, when in operation, replaces the previous cell-specific UE ID with the newly-assigned cell-specific UE ID.

8. The user equipment according to any of claims 1 to 7, wherein the processor, when transitioning to the inactive state, does not suspend at least one data connection the UE had maintained in the connected state, optionally wherein the non-suspended at least one data connection is specific to the transmission of small data, or
wherein the processor, when transitioning to the inactive state, does not suspend any of the data connections the UE had maintained in the connected state, or
wherein the processor, when transitioning to the inactive state, suspends all data connections the UE had maintained in the connected state and creates a new data connection specific to the transmission of small data.

9. A method comprising the following steps performed by a user equipment, UE:
determining that a transmission of small data is to be performed,
wherein the UE is in an inactive state with at least one data connection to a radio base station that controls a radio cell in which the UE is located, and wherein the UE is assigned at least with a cell-specific UE identification and a non-cell-specific UE identification,
determining which UE identification to use for the small data transmission, based on whether the UE, after having transitioned to the inactive state, has moved to the current radio cell from another radio cell,
in case the UE has moved to the current radio cell from another radio cell,
∘ determining to use the non-cell-specific UE identification for the small data transmission,
in case the UE has not moved to the current radio cell from another radio cell,
∘ determining to use the cell-specific UE identification for the small data transmission,
transmitting a control message including the determined UE identification and transmitting the small data using one of the at least one data connection.

10. A radio base station comprising:
a receiver, which in operation, receives, from a user equipment, UE, a control message including a UE identification and receives, from the UE, small data via a data connection established for the UE, wherein the UE is in an inactive state, wherein the UE identification is either a cell-specific UE identification or a non-cell-specific UE identification, and
a processor, which in operation, decodes the small data, using a UE context associated with the UE and the one data connection.

11. The radio base station according to claim 10, wherein the UE context is either stored locally within the radio base station, or retrieved from another radio base station.

12. The radio base station according to claim 10 or 11, wherein the UE is in a connected state having at least one data connection already established between the UE and the radio base station, wherein the processor, when in operation, determines to transition the UE into an inactive state, and
a transmitter, which in operation, instructs the UE to transition into the inactive state,
wherein the processor, when in operation, determines to not suspend the at least one data connection already established between the UE and the radio base station in the connected state, and wherein the one data connection used for the small data transmission is one of the non-suspended at least one data connection, and optionally wherein the non-suspended at least one data connection is specific to the transmission of small data, or
wherein the processor, when transitioning the UE to the inactive state, does not suspend all data connections already established between the UE and the radio base station in the connected state, and wherein the one data connection used for the small data transmission is one of the non-suspended data connections, or
wherein the processor, when transitioning the UE to the inactive state, suspends all data connection already established between the UE and the radio base station in the connected state, and establishes the one data connection with the UE, optionally wherein the newly established one data connection is specific to the transmission of small data.

13. The radio base station according to any of claims 10 to 12, wherein the processor, when in operation, determines that the UE, after having transitioned to the inactive state, has moved to the radio base station from a different radio base station, based on the received UE identification, the UE identification being a non-cell-specific UE identification,
wherein the processor, when in operation, determines the different radio base station, based on the non-cell-specific UE identification,
wherein the radio base station comprises a transmitter, which in operation, transmits, to the different radio base station, a request for a context of the UE,
wherein the receiver, when in operation, receives, from the different radio base station, a response including the context of the UE, and
wherein the processor, when in operation, decodes the received small data using the received context of the UE.

14. The radio base station according to any of claims 10 to 13, wherein the cell-specific UE identification is assigned by the radio base station to the UE, and wherein the processor, when in operation, operates a UE-ID-validity timer for the cell-specific UE identification,
wherein the processor, when in operation, starts the UE-ID-validity timer, when the UE transitions from a connected state to the inactive state,
wherein the processor, when determining that the UE-ID-validity timer has expired for the cell-specific UE identification, considers the value of the cell-specific UE identification to no longer be associated with the UE but to be available for association with another UE.

15. The radio base station according to any of claims 10 to 14, wherein the transmitter, when in operation, transmits a response message to the UE in response to the received control message, wherein the response message includes an indication instructing the UE to stay in the inactive state or to transition to one of a connected state or an idle state.
